# EUROPEAN PATENT APPLICATION

(11) **EP 4 475 402 A1**
(43) Date of publication of application: **11.12.2024**
(21) Application number: 23779206.4
(22) Date of filing: 02.03.2023
(51) Int. Cl.: H02K 3/52, H02K 3/46

(54) **AXIAL GAP-TYPE MOTOR AND AIR CONDITIONER**

(30) Priority: 31.03.2022 JP 2022060030; 31.03.2022 JP 2022060032
(71) Applicant: DAIKIN INDUSTRIES, LTD., Osaka-shi, Osaka 530-0001 (JP)
(72) Inventor: KOBATA, Teppei, Osaka-Shi, Osaka 530-0001 (JP); ISHIMARU, Jun, Osaka-Shi, Osaka 530-0001 (JP)
(74) Representative: Hoffmann Eitle
(86) International application number: PCT/JP2023/007833
(87) International publication number: WO 2023/189177

(57) **Abstract**

An axial gap-type motor (M) includes a rotor (10, 20) and a stator (30) facing the rotor (10, 20) with an air gap (G1, G2) interposed between the stator (30) and the rotor (10, 20) in an axial direction of the rotor (10, 20), in which the stator (30) includes a plurality of stator cores (110) arranged in an annular pattern and a coil (120) wound around each of the stator cores (110), and outgoing lines (121) drawn out from the coils (120) are electrically connected to power source lines (Lu, Lv, Lw) on inner sides in a radial direction of the stator cores (110) relative to inner peripheral ends of the stator cores (110).

## Description

### TECHNICAL FIELD

The present disclosure relates to an axial gap-type motor and an air conditioner.

### BACKGROUND ART

There has been an axial gap-type motor in which a coil is connected to a power source line via a printed circuit board or an electric connecting terminal (see, for example, JP 2013-118750 A (Patent Literature 1)).

### CITATION LIST

### PATENT LITERATURE

Patent Literature 1: JP 2013-118750 A

### SUMMARY OF INVENTION

### TECHNICAL PROBLEMS

In the axial gap-type motor, an input-side end to which the power source line is connected is provided on an outer side of a stator in a radial direction, which restricts an outer diameter of a stator core and leads to deterioration in motor magnetic characteristics. In such an axial gap-type motor, a restriction on an outer diameter of a stator core hinders higher output and higher efficiency.

The present disclosure proposes an axial gap-type motor capable of achieving higher output and higher efficiency, and an air conditioner including the axial gap-type motor.

### SOLUTIONS TO PROBLEMS

An axial gap-type motor according to a first aspect of the present disclosure includes:
a rotor; and
a stator facing the rotor with an air gap interposed between the stator and the rotor in an axial direction of the rotor,
in which the stator includes a plurality of stator cores arranged in an annular pattern and a coil wound around each of the stator cores, and
outgoing lines drawn out from the coils are electrically connected to power source lines on inner sides in a radial direction of the stator cores relative to inner peripheral ends of the stator cores.

According to the present disclosure, a magnet outer diameter of the rotor can be made larger than a case where the outgoing lines extending from the coils are electrically connected to the power source lines on the outer sides in the radial direction of the stator cores, so that it is possible to achieve higher output and higher efficiency.

In addition, an axial gap-type motor according to a second aspect of the present disclosure is based on the axial gap motor according to the first aspect and further includes a connection plate in which connecting lines are routed, each of the connecting lines electrically connecting between the outgoing lines of the coils.

According to the present disclosure, it is possible to facilitate the routing work such as connection between the coils by manufacturing in advance the connection plate in which the connecting lines are routed.

In addition, an axial gap-type motor (M) according to a third aspect of the present disclosure is based on the axial gap motor according to the second aspect, in which the connection plate includes press-fitting portions into which are press-fitted, the outgoing lines of the coils electrically connecting to the connecting lines via the electric connecting terminals.

According to the present disclosure, it is possible to facilitate the establishment of electrical connection between the outgoing lines of the coils and the connecting lines.

In addition, an axial gap-type motor according to a fourth aspect of the present disclosure is based on the axial gap-type motor according to the third aspect, in which the stator includes insulators that insulate the stator cores from the coils,
the insulators each include a projection extending toward the inner side in the radial direction of a corresponding one of the stator cores and a positioning portion provided in the projection, and
the positioning portions of the insulators and the press-fitting portions of the connection plate are fitted to each other to position the stator cores and the coils relative to the connection plate.

According to the present disclosure, it is possible to facilitate the assembly work of the stator cores and the coils.

In addition, an axial gap-type motor according to a fifth aspect of the present disclosure is based on the axial gap-type motor according to the third aspect or the fourth aspect, in which the press-fitting portions are provided in the connection plate so as to allow the outgoing lines of the coils wound around the stator cores to be each routed at an acute angle relative to a center line of a corresponding one of the stator cores along a radial direction of the stator.

According to the present disclosure, it is possible to establish, by providing each of the press-fitting portions at a position along the outgoing direction of the outgoing line drawn out from the outer periphery of the corresponding coil (direction of the tangent to the outer periphery of the coil), connection between the outgoing line and each of the connecting lines at the press-fitting portion in a smooth manner.

In addition, an axial gap-type motor according to a sixth aspect of the present disclosure is based on the axial gap-type motor according to any one of the second aspect to the fifth aspect, in which a cylindrical portion extending in the axial direction of the rotor is provided in a center portion of the connection plate.

According to the present disclosure, it is possible to guide the routing work of the connecting lines in the connection plate.

In addition, an axial gap-type motor according to a seventh aspect of the present disclosure is based on the axial gap-type motor according to the sixth aspect, in which protrusions that position the connecting lines are provided on an outer peripheral surface of the cylindrical portion of the connection plate.

According to the present disclosure, it is possible to guide and hold, in a simple manner, the connecting lines in the connection plate during the routing work, which increases work efficiency.

In addition, an axial gap-type motor according to an eighth aspect of the present disclosure is based on the axial gap-type motor according to any one of the second aspect to the seventh aspect, in which holding portions that hold ends of the connecting lines are provided in an outer peripheral portion of the connection plate.

According to the present disclosure, the ends of the connecting lines are held, so that it is possible to position, in a reliable manner, the connecting lines in the connection plate.

In addition, an axial gap-type motor according to a ninth aspect of the present disclosure is based on the axial gap-type motor according to any one of the second aspect to the eighth aspect, in which the connection plate is configured to enable routing of the connecting lines to adapt to both series connection of the coils and parallel connection of the coils.

According to the present disclosure, it is possible to implement a highly versatile axial gap-type motor adapted to both the series connection of the coils and the parallel connection of the coils.

In addition, an axial gap-type motor according to a tenth aspect of the present disclosure is based on the axial gap-type motor according to any one of the first aspect to the ninth aspect, in which any one of a U-phase voltage, a V-phase voltage, or a W-phase voltage is applied to the coils via a corresponding one of the power source lines,
the stator has magnetic poles formed by the coils and the stator cores around which the coils are wound,
the magnetic poles in which the voltage of the same phase is applied to the coils include pairs of magnetic poles, each pair of magnetic poles corresponding to two of the magnetic poles adjacent to each other and having one ends of their respective coils connected to each other, and
the pairs of magnetic poles are arranged point-symmetrically with respect to a center of the stator.

In addition, an axial gap-type motor according to an eleventh aspect of the present disclosure is based on the axial gap-type motor according to the first aspect, in which the stator includes insulators that insulate the stator cores from the coils,
the power source lines are routed, through between the stator cores, from an outer side in a radial direction of the stator to the inner side in the radial direction of the stator relative to the inner peripheral ends of the stator cores, and
holding portions that hold the power source lines are provided at portions of the insulators adjacent to each other, the portions facing each other and being located on one sides of the insulators in an axial direction of the stator and on inner sides of the insulators in the radial direction of the stator.

According to the present disclosure, the magnet outer diameter of the rotor can be made larger than a case where the outgoing lines extending from the coils are electrically connected to the power source lines on the outer sides in the radial direction of the stator cores, so that it is possible to achieve higher output and higher efficiency.

In addition, an axial gap-type motor according to a twelfth aspect of the present disclosure is based on the axial gap-type motor according to the eleventh aspect and further includes a connection plate in which connecting lines are routed, each of the connecting lines electrically connecting between the outgoing lines drawn out from the coils.

According to the present disclosure, it is possible to facilitate the routing work such as connection between the coils by manufacturing in advance the connection plate in which the connecting lines are routed.

In addition, an air conditioner according to a thirteenth aspect of the present disclosure includes:
the axial gap-type motor according to any one of the first aspect to the twelfth aspect; and
a fan driven by the axial gap motor.

According to the present disclosure, it is possible to increase air blowing performance by driving the fan with the axial gap-type motor capable of achieving higher output and higher efficiency.

In addition, an axial gap-type motor according to a fourteenth aspect of the present disclosure is based on the axial gap-type motor according to the eleventh aspect or the twelfth aspect and includes a part of the configuration according to the second aspect to the tenth aspect.

That is, the axial gap-type motor according to the fourteenth aspect of the present disclosure corresponds to an axial gap-type motor obtained by applying the part of the configuration according to the second aspect to the tenth aspect to the axial gap-type motor according to the eleventh aspect or the twelfth aspect.

In addition, an air conditioner according to a fifteenth aspect of the present disclosure includes:
the axial gap-type motor according to the fourteenth aspect; and
a fan driven by the axial gap motor.

An axial gap-type motor according to a sixteenth aspect of the present disclosure includes:
a rotor; and
a stator facing the rotor with an air gap interposed between the stator and the rotor in an axial direction of the rotor, in which the stator includes stator cores, coils wound around the stator cores, and insulators that insulate the stator cores from the coils,
power source lines routed, through between the stator cores, from an outer side in a radial direction of the stator to an inner side in the radial direction of the stator relative to inner peripheral ends of the stator cores are electrically connected to outgoing lines drawn out from the coils on inner sides in the radial direction of the stator cores, and
holding portions that hold the power source lines are provided at portions of the insulators adjacent to each other, the portions facing each other and being located on one sides of the insulators in an axial direction of the stator and on inner sides of the insulators in the radial direction of the stator.

According to the present disclosure, a magnet outer diameter of the rotor can be made larger than a case where the outgoing lines extending from the coils are electrically connected to the power source lines on the outer sides in the radial direction of the stator cores, so that it is possible to achieve higher output and higher efficiency.

In addition, an axial gap-type motor according to a seventeenth aspect of the present disclosure includes a connection plate in which connecting lines that electrically connect between the outgoing lines drawn out from the coils are routed.

According to the present disclosure, it is possible to facilitate the routing work such as connection between the coils by manufacturing in advance the connection plate in which the connecting lines are routed.

In addition, an air conditioner according to an eighteenth aspect of the present disclosure includes:
the axial gap-type motor according to the sixteenth aspect or the seventeenth aspect; and
a fan driven by the axial gap motor.

According to the present disclosure, it is possible to increase air blowing performance by driving the fan with the axial gap-type motor capable of achieving higher output and higher efficiency.

### BRIEF DESCRIPTION OF DRAWINGS

Fig. 1 is an overall perspective view of an axial gap-type motor of a first embodiment of the present disclosure.
Fig. 2 is an exploded perspective view of the axial gap-type motor of the first embodiment.
Fig. 3 is a side view of the axial gap-type motor of the first embodiment.
Fig. 4 is a cross-sectional view taken along line IV-IV in Fig. 3.
Fig. 5 is an exploded perspective view of a stator of the first embodiment with a resin-molded portion removed.
Fig. 6 is an exploded perspective view of the stator of the first embodiment with the resin-molded portion removed.
Fig. 7 is a perspective view of a connection plate of the stator and a power source line of the first embodiment.
Fig. 8 is an exploded perspective view of the connection plate and the power source line of the first embodiment.
Fig. 9 is a perspective view of the connection plate and a pair of split cores of the first embodiment before assembly.
Fig. 10 is a perspective view of the connection plate and the pair of split cores of the first embodiment that have been assembled.
Fig. 11 is a plan view of the connection plate of the first embodiment.
Fig. 12 is a plan view of a connection between the connection plate and the power source line of the first embodiment.
Fig. 13 is a plan view of a pair of split cores of the first embodiment.
Fig. 14 is a plan view of the power source line and the pair of split cores of the first embodiment with the power source line routed to the pair of split cores.
Fig. 15 is an enlarged perspective view of a main part of the pair of split cores.
Fig. 16 is a side view of the pair of split cores of the first embodiment as viewed from an inner side in a radial direction.
Fig. 17 is a cross-sectional view taken along line XVII-XVII in Fig. 16.
Fig. 18 is a plan view of the connection plate of the first embodiment.
Fig. 19 is a diagram illustrating a U-phase connection (series connection) of the stator of the first embodiment.
Fig. 20 is a diagram illustrating a V-phase connection (series connection) of the stator of the first embodiment.
Fig. 21 is a diagram illustrating a W-phase connection (series connection) of the stator of the first embodiment.
Fig. 22 is a diagram illustrating a neutral point connection of the stator of the first embodiment.
Fig. 23 is a diagram illustrating a neutral point connecting line of the connection plate of the first embodiment.
Fig. 24 is a plan view of a connection plate of an axial gap-type motor of a second embodiment of the present disclosure.
Fig. 25 is a diagram illustrating a U-phase connection (parallel connection) of a stator of the second embodiment.
Fig. 26 is a diagram illustrating a V-phase connection (parallel connection) of the stator of the second embodiment.
Fig. 27 is a diagram illustrating a W-phase connection (parallel connection) of the stator of the second embodiment.
Fig. 28 is a diagram illustrating a neutral point connection of the stator of the second embodiment.
Fig. 29 is a diagram illustrating a neutral point connecting line of the connection plate of the second embodiment.
Fig. 30 is a circuit diagram of an air conditioner using an axial gap-type motor of a third embodiment of the present disclosure.
Fig. 31 is a plan view of a connection plate of an axial gap-type motor of a fourth embodiment of the present disclosure.
Fig. 32 is a plan view of a connection plate of an axial gap-type motor of a fifth embodiment of the present disclosure.
Fig. 33 is a circuit diagram of an air conditioner using an axial gap-type motor of a sixth embodiment of the present disclosure.

### DESCRIPTION OF EMBODIMENTS

Embodiments will be described below. Note that, in the drawings, the same reference numerals represent the same or corresponding parts. In addition, the dimensions on the drawings, such as lengths, widths, thicknesses, and depths, are appropriately changed from actual scales for clarity and simplification of the drawings, and do not represent actual relative dimensions.

### [First embodiment]

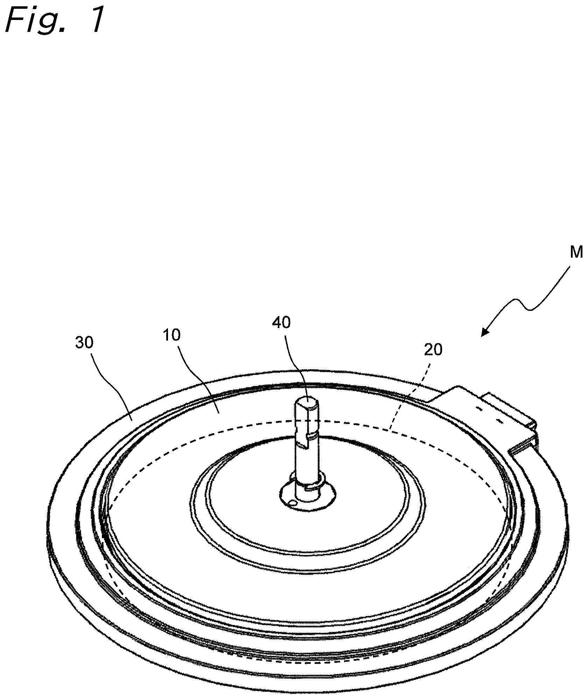

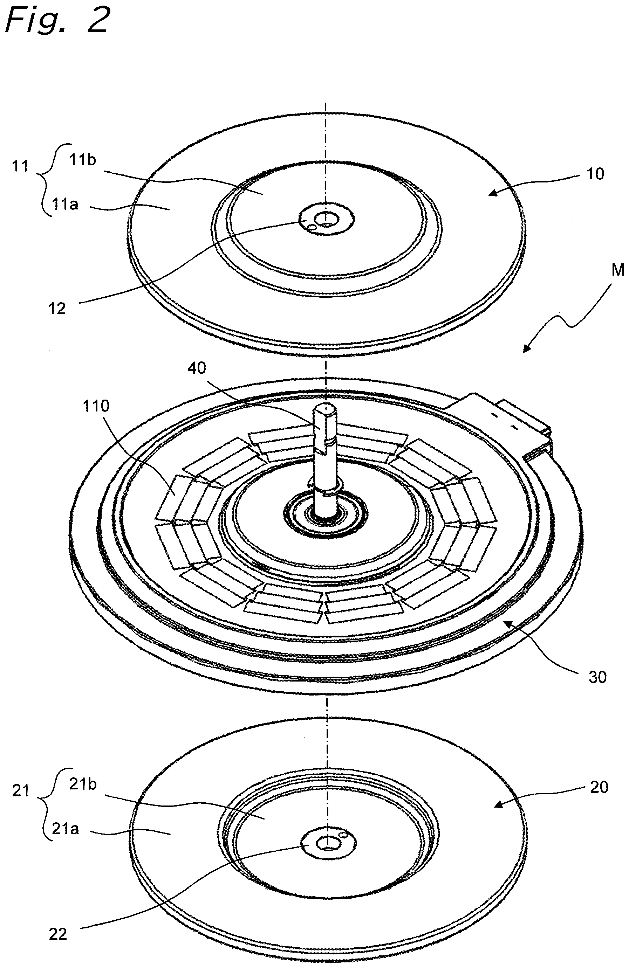

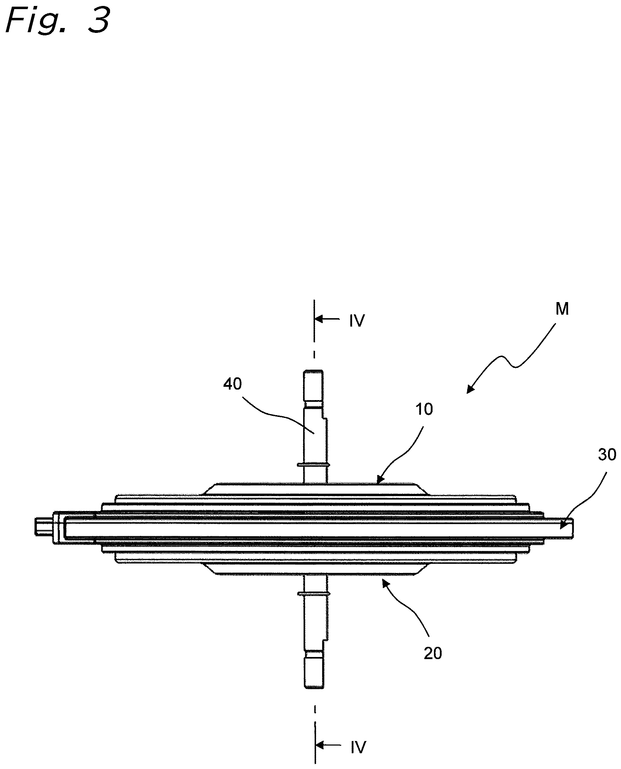

Fig. 1 is an overall perspective view of an axial gap-type motor M of a first embodiment of the present disclosure, Fig. 2 is an exploded perspective view of the axial gap-type motor M, and Fig. 3 is a side view of the axial gap-type motor M.

As illustrated in Figs. 1 to 3, the axial gap-type motor M of this embodiment includes first and second rotors 10 and 20 each having a disk shape, a stator 30 sandwiched between the first and second rotors 10 and 20 in an axial direction, and a shaft 40 rotatably supported by the stator 30. The axial gap-type motor M is a 10-pole 12-slot motor.

The first rotor 10 includes a disk-shaped magnet member 11 and a fixing portion 12 provided at a center portion of the disk-shaped magnet member 11. The shaft 40 is fixed to an inner periphery of the fixing portion 12.

The disk-shaped magnet member 11 is a plastic magnet having a polar anisotropic orientation, and includes an outer peripheral portion 11a having an annular shape and an inner peripheral portion 11b formed on an inner periphery of the outer peripheral portion 11a and bulging outward in the axial direction of the shaft 40 (upward in Figs. 1 to 3). In the outer peripheral portion 11a, S poles and N poles are alternately arranged in a circumferential direction.

In addition, the second rotor 20 includes a disk-shaped magnet member 21 and a fixing portion 22 provided at a center portion of the disk-shaped magnet member 21. The shaft 40 is fixed to an inner periphery of the fixing portion 22.

The disk-shaped magnet member 21 is a plastic magnet having a polar anisotropic orientation, and includes an outer peripheral portion 21a having an annular shape and an inner peripheral portion 21b formed on an inner periphery of the outer peripheral portion 21a and bulging outward in the axial direction of the shaft 40 (downward in Figs. 1 to 3). In the outer peripheral portion 21a, S poles and N poles are alternately arranged in the circumferential direction.

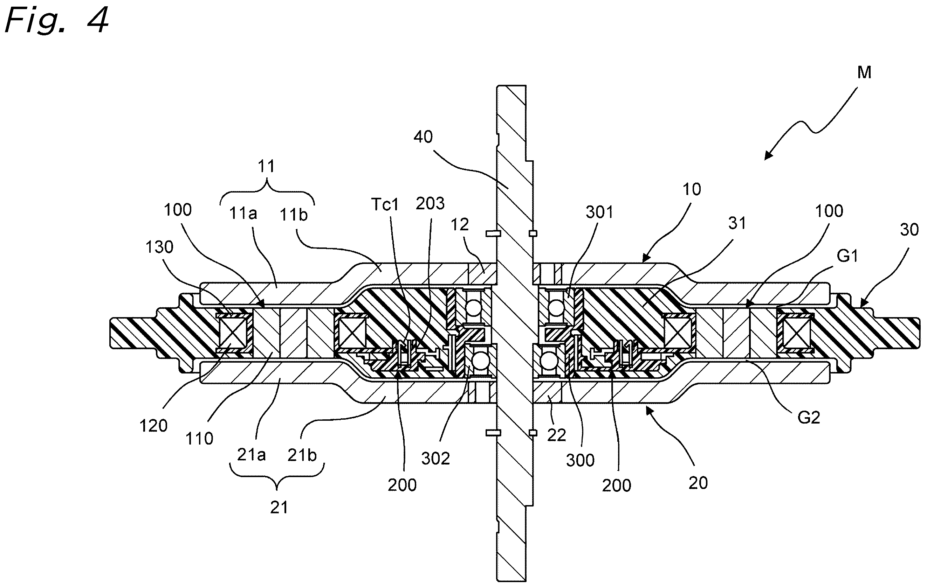

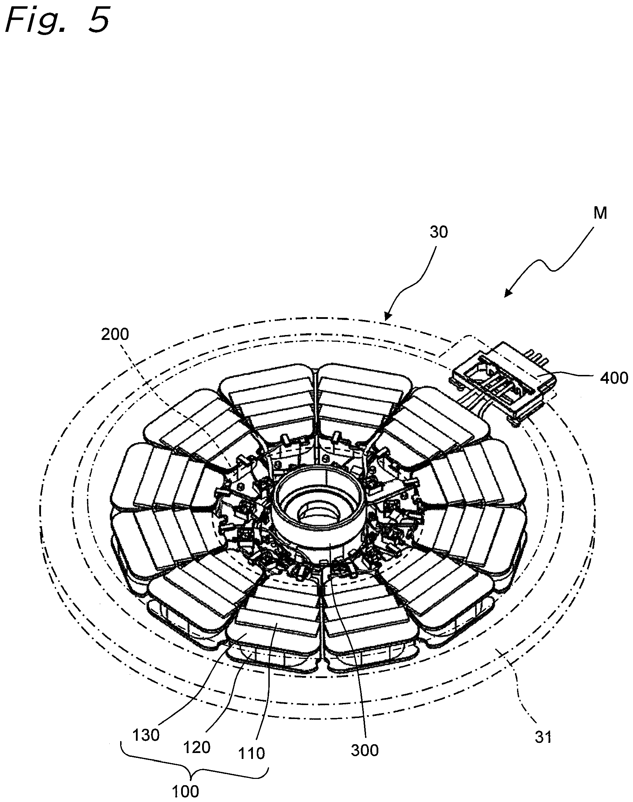

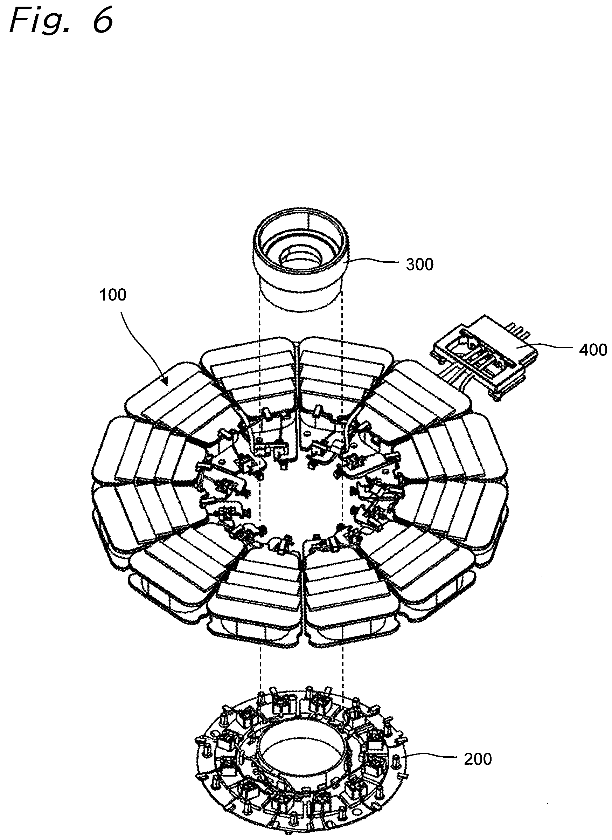

Fig. 4 is a cross-sectional view taken along line IV-IV in Fig. 3, Fig. 5 is a perspective view of the stator 30 with a resin-molded portion 31 removed, and Fig. 6 is an exploded perspective view of the stator 30 with the resin-molded portion 31 removed. In Figs. 5 and 6, "400" denotes a bushing that leads out power source lines Lu, Lv, and Lw.

As illustrated in Figs. 4, 5, and 6, the stator 30 includes 12 split cores 100 arranged in an annular pattern, a connection plate 200 to which the split cores 100 are fixed, a bearing holding portion 300 fixed to a center of the connection plate 200, a first bearing 301 disposed adjacent to the first rotor 10 in the bearing holding portion 300, a second bearing 302 disposed adjacent to the second rotor 20 in the bearing holding portion 300, and the resin-molded portion 31 having a disk shape and formed by resin molding the split cores 100, the connection plate 200, and the bearing holding portion 300.

The split cores 100 each includes a stator core 110, a coil 120 wound around the stator core 110, and an insulator 130 that insulates the stator core 110 from the coil 120.

The stator core 110 faces the first rotor 10 in the axial direction of the first rotor 10 with an air gap G1 interposed between the stator core 110 and the first rotor 10, and faces the second rotor 20 in the axial direction of the second rotor 20 with an air gap G2 interposed between the stator core 110 and the second rotor 20. The air gaps G1 and G2 are, for example, 0.5 mm to 1 mm.

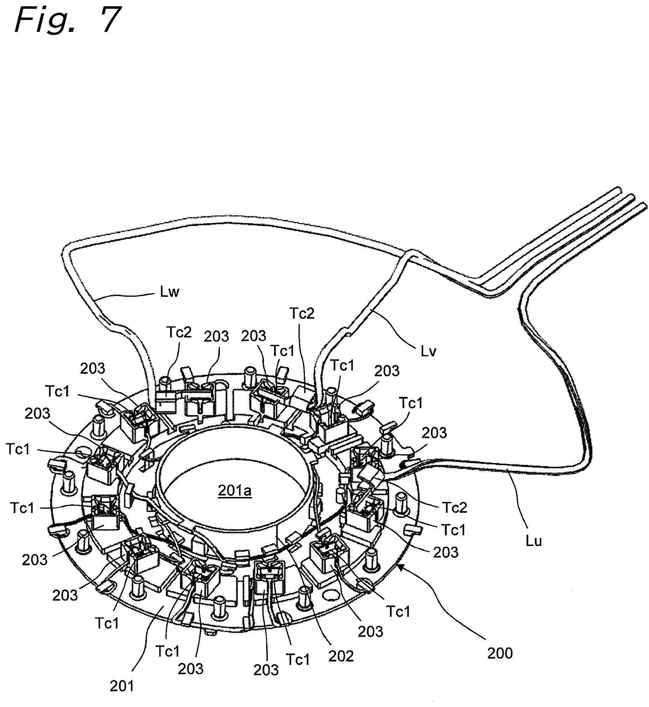

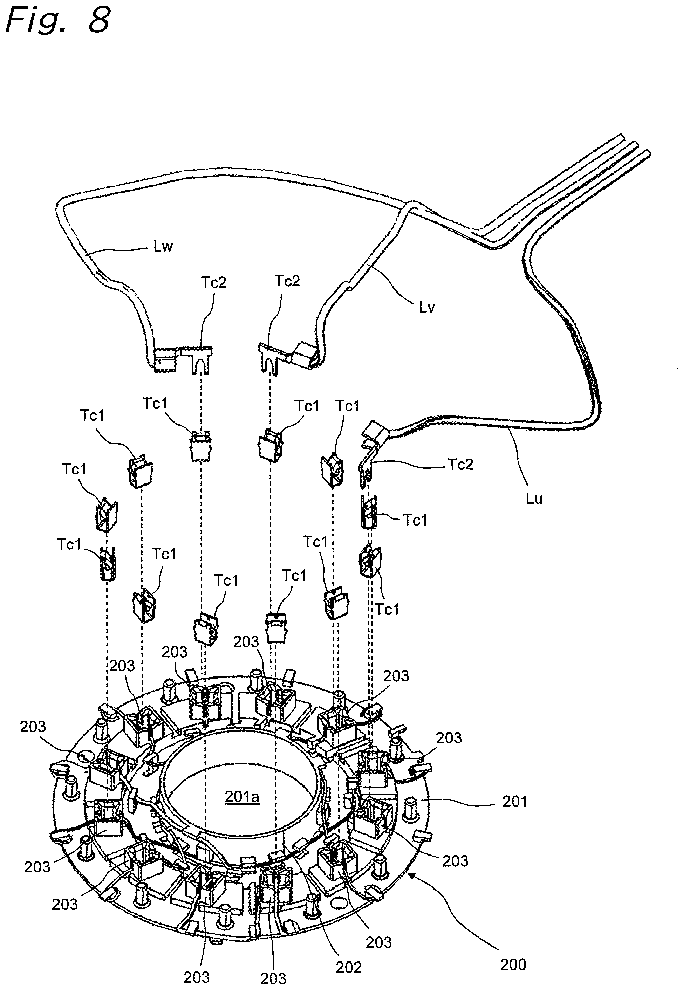

Fig. 7 is a perspective view of the connection plate 200 of the stator 30 and the power source lines Lu, Lv, and Lw, and Fig. 8 is an exploded perspective view of the connection plate 200 and the power source lines Lu, Lv, and Lw.

As illustrated in Figs. 7 and 8, the connection plate 200 includes an annular disk portion 201 having a hole 201a at its center and a cylindrical portion 202 extending toward one side in the axial direction along an inner periphery of the hole 201a of the disk portion 201. The annular disk portion 201 is provided with 12 press-fitting portions 203 at intervals in the circumferential direction, a first terminal Tc1 being press-fitted into each of the press-fitting portions 203. The first terminal Tc1 is an example of an electric connecting terminal. Although not limited, a mag-mate terminal is used as the first terminal Tc1 in this embodiment.

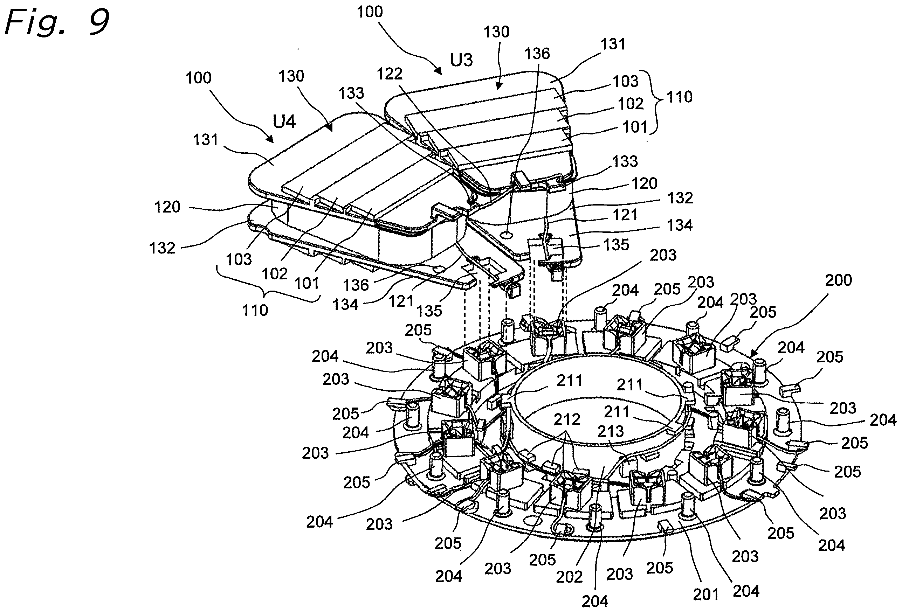

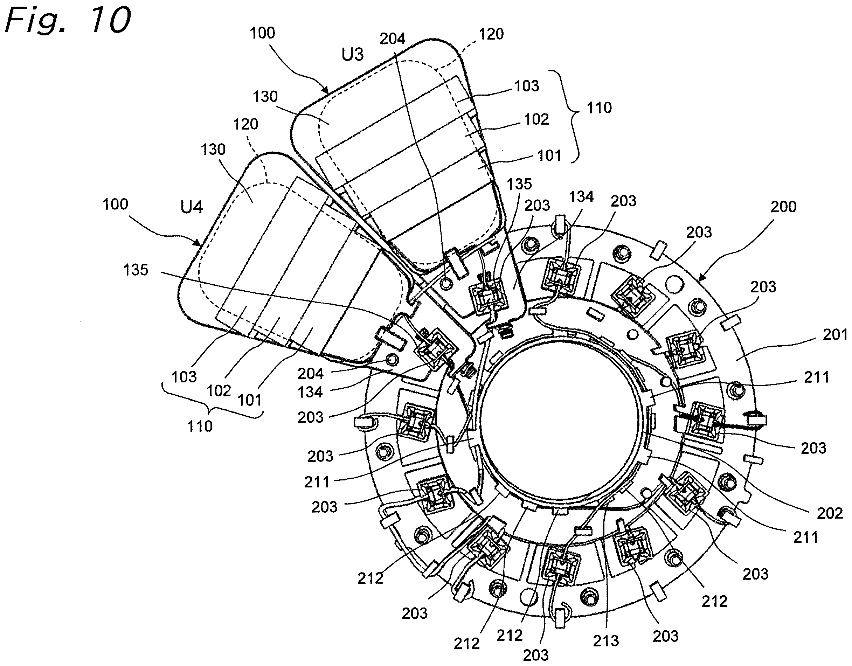

The split cores 100 having the coils 120 to which U-phase, W-phase, and V-phase voltages are applied are each fixed to a corresponding one of the press-fitting portions 203. How to fix is illustrated in Figs. 9 and 10.

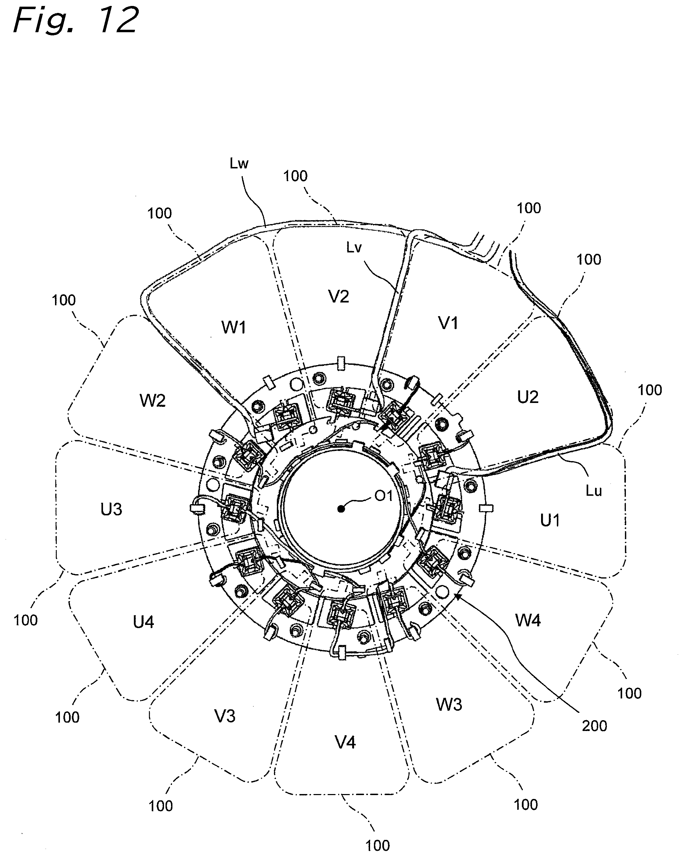

The power source line Lu is connected to the corresponding press-fitting portion 203 to which the split core 100 (magnetic pole U1 in Fig. 12) is fixed via a second terminal Tc2. The power source line Lv is connected to the corresponding press-fitting portion 203 to which the split core 100 (magnetic pole V2 in Fig. 12) is fixed via the second terminal Tc2. The power source line Lw is connected to the corresponding press-fitting portion 203 to which the split core 100 (magnetic pole W1 in Fig. 12) is fixed via the second terminal Tc2. Although not limited, a tab terminal connectable to a mag-mate terminal is used as the second terminal Tc2 in this embodiment.

The first terminal Tc1 is a female terminal made of a conductive metal. The second terminal Tc2 is made of a conductive metal and is a male terminal corresponding to the first terminal Tc1 that is a female terminal. When the second terminal Tc2 is fitted into a receiving portion of the first terminal Tc1, the first terminal Tc1 and the second terminal Tc2 are electrically connected to each other.

The first terminal Tc1 is press-fitted into each press-fitting portion 203 provided in the connection plate 200. In addition, the first terminal Tc1 includes a connection groove (not illustrated) for establishing electrical connection with an outgoing line 121 (illustrated in Fig. 9) drawn out from each coil 120, and the receiving portion (not illustrated) connectable to the second terminal Tc2.

In each press-fitting portion 203 across which the outgoing line 121 from the corresponding coil 120 extends, the outgoing line 121 extending from the coil 120 is fitted into the connection groove of the first terminal Tc1 with the first terminal Tc1 press-fitted into the press-fitting portion 203, so that the first terminal Tc1 and the coil 120 are electrically connected to each other.

At the same time, in the press-fitting portions 203 across which connecting lines Luc1, Lvc1, and Lwc1 routed in advance in the connection plate 200 extend, the connecting lines Luc1, Lvc1, and Lwc1 are each fitted into the connection groove of the corresponding first terminal Tc1 with the first terminal Tc1 press-fitted into the press-fitting portion 203, so that the connecting lines Luc1, Lvc1, and Lwc1 and the coils 120 are electrically connected to each other.

Fig. 9 is a perspective view of the connection plate 200 and a pair of split cores 100 before assembly. Fig. 9 illustrates the connection plate 200, and a split core 100 (magnetic pole U3) and a split core 100 (magnetic pole U4) adjacent to each other.

As illustrated in Fig. 9, the coils 120 of the pair of split cores 100 (magnetic poles U3, U4) are connected in series via a transition line 122.

The stator core 110 of each split core 100 includes a first core portion 101, a second core portion 102, and a third core portion 103 each having an H shape but different in size from each other. The second core portion 102 is larger in width in the circumferential direction than the first core portion 101, and the third core portion 103 is larger in width in the circumferential direction than the second core portion 102.

The first core portion 101, the second core portion 102, and the third core portion 103 are arranged in this order from a side adjacent to the connection plate 200 toward the outer side in the radial direction. The first core portion 101, the second core portion 102, and the third core portion 103 are each formed by stacking H-shaped steel plates in the radial direction.

The insulator 130 includes a cylindrical portion (not illustrated) around which the coil 120 is wound, and a first flange portion 131 and a second flange portion 132 that are provided at both ends of the cylindrical portion and between which the coil 120 is sandwiched in the axial direction.

A hook portion 133 on which the transition line 122 is hooked is provided at a side adjacent to the connection plate 200 of the first flange portion 131 illustrated on the upper side in Fig. 9. In addition, a projection 134 extending toward the inner side in the radial direction relative to the stator core 110 is provided at a side adjacent to the connection plate 200 of the second flange portion 132 illustrated on the lower side in Fig. 9. The projection 134 is provided with a cutout 135 having a square shape and a round hole 136. The cutout 135 is an example of a positioning portion.

Note that the positioning portion is not limited to the cutout 135, and may be any other form that can be fitted to the connection plate.

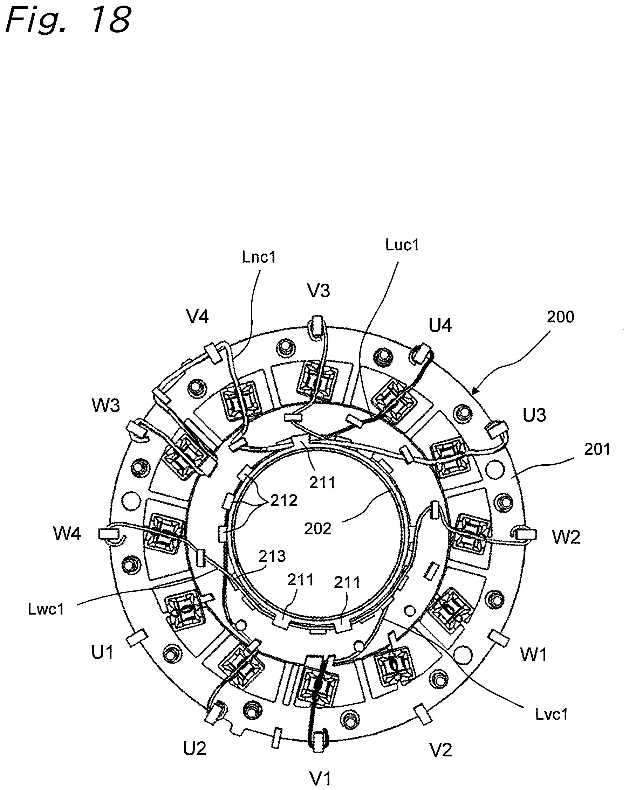

In addition, in Fig. 9, reference numerals 211, 212, 213 denote protrusions provided on an outer peripheral surface of the cylindrical portion 202 of the connection plate 200 and positions the connecting lines Luc1, Lvc1, Lwc1, and Lnc1 (see Fig. 18).

Fig. 10 is a plane view of the connection plate 200 and the pair of split cores 100 that have been assembled. As illustrated in Fig. 10, the cutout 135 of the insulator 130 and the press-fitting portion 203 of the connection plate 200 are fitted to each other, and each split core 100 including the stator core 110 and the coil 120 is positioned relative to the connection plate 200.

At this time, a cylindrical protrusion 204 provided on the connection plate 200 is inserted into the round hole 136 of the insulator 130 to assist in positioning of the split core 100 relative to the connection plate 200.

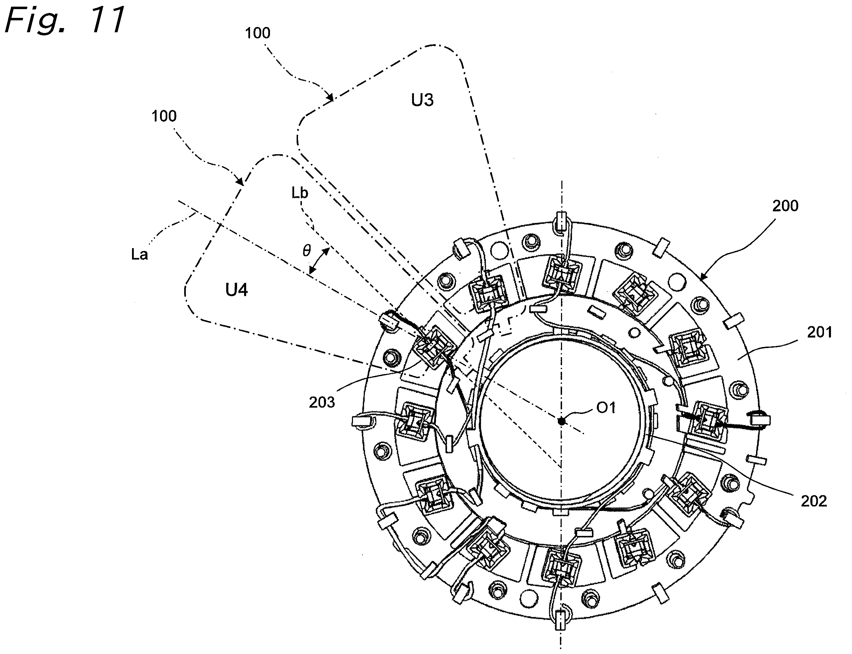

As illustrated in Fig. 11, each press-fitting portion 203 is provided on the connection plate 200 so as to allow the outgoing line 121 of the coil 120 wound around the stator core 110 to be routed at an acute angle θ relative to a center line La of the stator core 110 along the radial direction of the stator 30. Here, when a straight line along an outgoing direction of the outgoing line 121 from the coil 120 is Lb, an angle formed by the straight line Lb and the center line La is θ. Such a relationship holds true for all the press-fitting portions 203.

Fig. 12 is a plan view of a connection between the connection plate 200 and the power source lines Lu, Lv, and Lw. As illustrated in Fig. 12, the stator cores 110 and the coils 120 wound around the stator cores 110 form magnetic poles U1, U2, U3, and U4, magnetic poles W1, W2, W3, and W4, and magnetic poles V1, V2, V3, and V4.

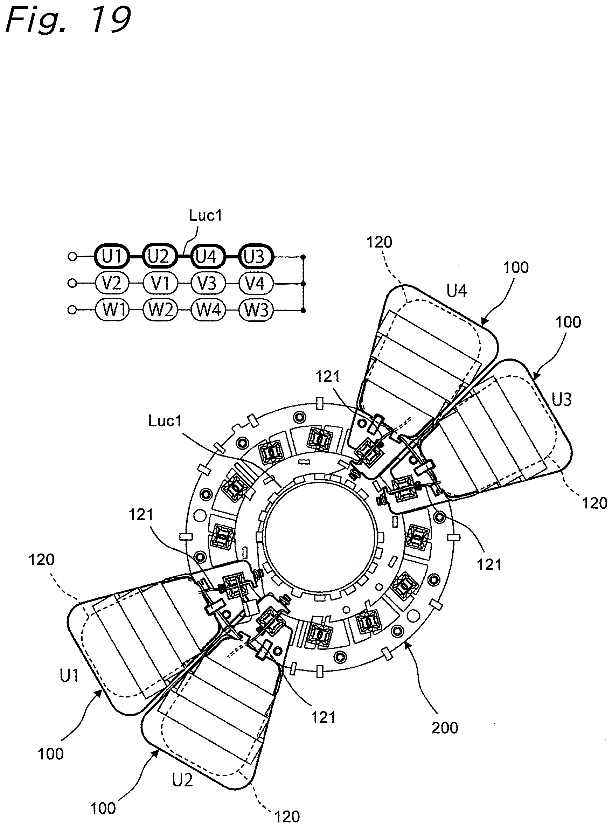

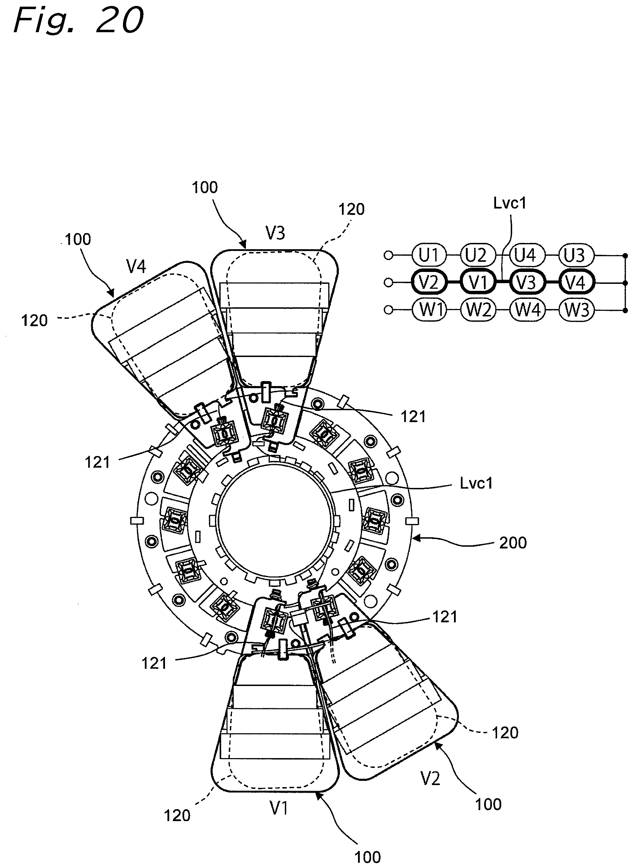

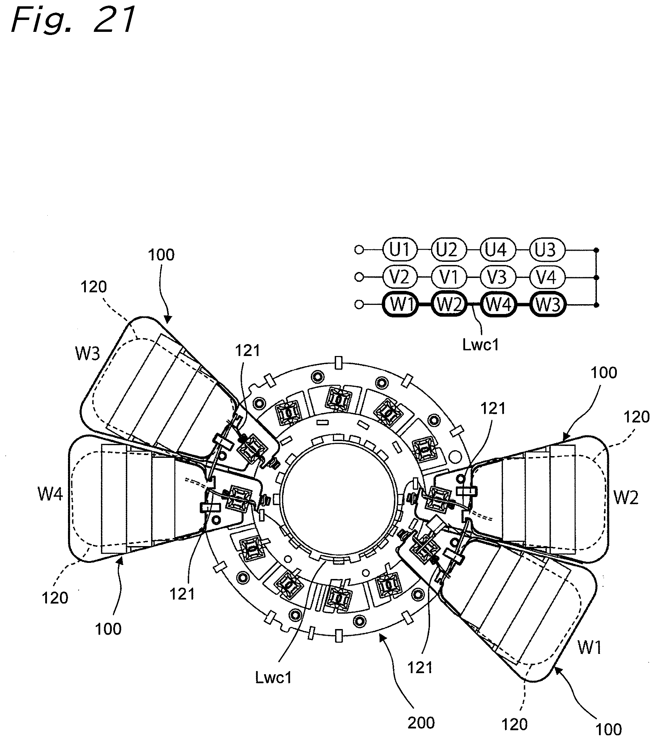

The power source line Lu through which a U-phase voltage is supplied to the coils 120 of the magnetic poles U1, U2, U3, and U4 passes through between the magnetic poles U1 and U2 and is electrically connected to the outgoing line 121 drawn out from the coil 120 of the magnetic pole U1 illustrated in Fig. 19. The power source line Lv through which a V-phase voltage is supplied to the coils 120 of the magnetic poles V1, V2, V3, and V4 passes through between the magnetic poles V1 and V2 and is electrically connected to the outgoing line 121 drawn out from the coil 120 of the magnetic pole V2 illustrated in Fig. 20. The power source line Lw through which a W-phase voltage is supplied to the coils 120 of the magnetic poles W1, W2, W3, and W4 passes through between the magnetic poles W1 and W2 and is electrically connected to the outgoing line 121 drawn out from the coil 120 of the magnetic pole W1 illustrated in Fig. 21.

In this embodiment, the outgoing line 121 drawn out from the coil 120 of the magnetic pole U1 is electrically connected to the power source line Lu on the inner side in the radial direction of the stator core 110 relative to an inner peripheral end of the stator core 110. In addition, the outgoing line 121 drawn out from the coil 120 of the magnetic pole V2 is electrically connected to the power source line Lv on the inner side in the radial direction of the stator core 110 relative to the inner peripheral end of the stator core 110. In addition, the outgoing line 121 drawn out from the coil 120 of the magnetic pole W1 is electrically connected to the power source line Lw on the inner side in the radial direction relative of the stator core 110 to the inner peripheral end of the stator core 110.

Among the magnetic poles U1, U2, U3, and U4 in which the same U-phase voltage is applied to their respective coils 120, a pair of magnetic poles, that is, the magnetic poles U1 and U2, adjacent to each other and having one ends of their respective coils 120 connected to each other, and a pair of magnetic poles, that is, the magnetic poles U3 and U4, having one ends of their respective coils 120 connected to each other are arranged point-symmetrically with respect to a center O1 of the stator 30.

Among the magnetic poles V1, V2, V3, and V4 in which the same V-phase voltage is applied to their respective coils 120, a pair of magnetic poles, that is, the magnetic poles V1 and V2, adjacent to each other and having one ends of their respective coils 120 connected to each other, and a pair of magnetic poles, that is the magnetic poles V3 and V4, having one ends of their respective coils 120 connected to each other are arranged point-symmetrically with respect to the center O1 of the stator 30.

Among the magnetic poles W1, W2, W3, and W4 in which the same W-phase voltage is applied to their respective coils 120, a pair of magnetic poles, that is, the magnetic poles W1 and W2, adjacent to each other and having one ends of their respective coils 120 connected to each other, and a pair of magnetic poles, that is, the magnetic poles W3 and W4, having one ends of their respective coils 120 connected to each other are arranged point-symmetrically with respect to the center O1 of the stator 30.

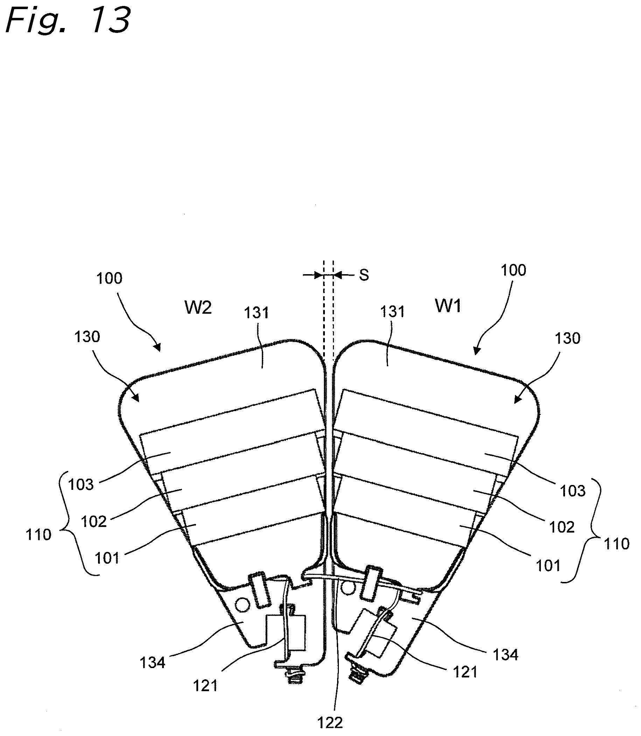

Fig. 13 is a plan view of a pair of split cores 100, and as illustrated in Fig. 13, a gap S is provided between the split cores 100 adjacent to each other.

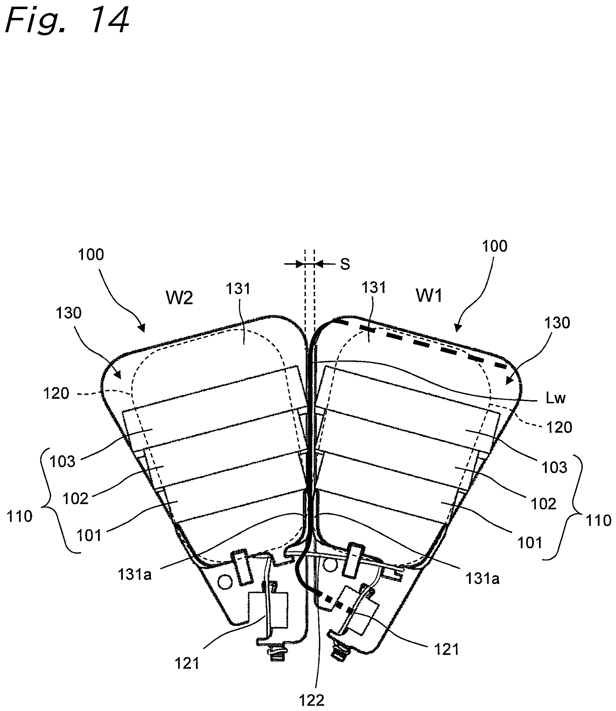

Fig. 14 is a plan view of the power source line Lw and the pair of split cores 100 with the power source line routed to the pair of split cores 100. As illustrated in Fig. 14, the power source line Lw is routed from the outer side in the radial direction toward the inner side in the radial direction through the gap S between the split core 100 (magnetic pole W1) and the split core 100 (magnetic pole W2). The power source line Lw passes through between a plane parallel to an end surface of the first flange portion 131 of the insulator 130 and a plane parallel to a surface of the stator core 110 facing the first rotor 10.

Note that the power source line Lu and the power source line Lv are routed through the gap S between the other split cores 100 in a similar manner.

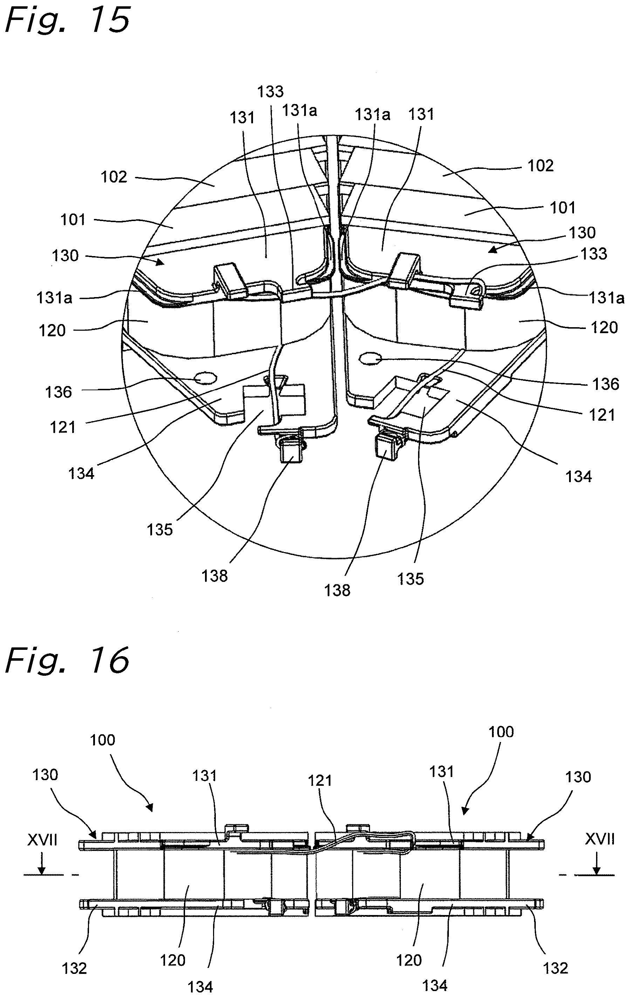

Fig. 15 is an enlarged perspective view of a main part of the pair of split cores 100. The first flange portion 131 of the insulator 130 is provided with a step 131a at a portion facing the first flange portion 131 of the insulator 130 of the adjacent split core 100 and on the inner side in the radial direction. The step 131a of the first flange portion 131 of the insulator 130 facilitates the routing of the power source lines Lu, Lv, and Lw.

In Fig. 15, "138" denotes a holding portion that holds an end of the outgoing line 121. The end of the outgoing line 121 extending from the coil 120 is wound around the holding portion 138.

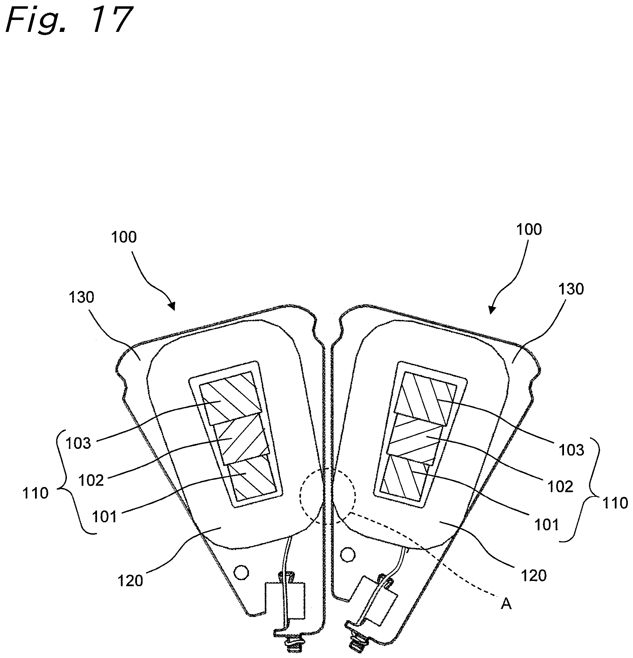

Fig. 16 is a side view of the pair of split cores 100 as viewed from the inner side in the radial direction, and Fig. 17 is a cross-sectional view taken along line XVII-XVII in Fig. 16.

As illustrated in Figs. 16 and 17, in a region A (illustrated in Fig. 17) enclosed by a dotted line, a gap between the coils 120 is narrowest. In this region A, the step 131a of the first flange portion 131 of the insulator 130 illustrated in Fig. 15 is used to bypass the narrow region between the coils 120. That is, the power source lines Lu, Lv, and Lw pass through between the coils 120 from the outer side in the radial direction of the stator 30, and the power source lines Lu, Lv, and Lw are routed to pass through the step 131a on the outer side of the coil end in the region A.

In the first embodiment, the coils 120 of each phase are connected in series. The series connection refers to a configuration where all coils to which the voltage of the same phase is applied are connected in series.

### <Connection plate (series connection)>

Fig. 18 is a plan view of the connection plate 200. Fig. 18 illustrates an area where the split cores 100 corresponding to the magnetic poles U1 to U4, V1 to V4, and W1 to W4 are arranged. In Fig. 18, with the magnetic pole U1 as a reference magnetic pole, the split cores 100 (illustrated in Fig. 6) corresponding to the magnetic poles U1 to U4, V1 to V4, and W1 to W4 are arranged in the order of U1, U2, V1, V2, W1, W2, U3, U4, V3, V4, W3, and W4 in the counterclockwise direction.

In Fig. 18, "Luc1" denotes a connecting line that electrically connects the outgoing line 121 of the magnetic pole U2 to the outgoing line 121 of the magnetic pole U4. In addition, "Lvc1" denotes a connecting line that electrically connects the outgoing line 121 of the coil 120 of the magnetic pole V1 to the outgoing line 121 of the coil 120 of the magnetic pole V3. In addition, "Lwc1" denotes a connecting line that electrically connects the outgoing line 121 of the magnetic pole W2 to the outgoing line 121 of the magnetic pole W4. In addition, "Lnc1" denotes a connecting line that electrically connects the outgoing line 121 of the magnetic pole U3 to the outgoing line 121 of the magnetic pole V4 and that electrically connects the outgoing line 121 of the magnetic pole V4 to the outgoing line 121 of the magnetic pole W3. In other words, the connecting line electrically connects one of the outgoing lines 121 of the magnetic pole U3, the magnetic pole V4, and the magnetic pole W3 to the other two of the outgoing lines 121 of the magnetic pole U3, the magnetic pole V4, and the magnetic pole W3.

The protrusions 211, 212, and 213 for positioning the connecting lines Luc1, Lvc1, Lwc1, and Lnc1 are provided on the outer peripheral surface of the cylindrical portion 202 of the connection plate 200.

Fig. 19 illustrates a U-phase connection (series connection) of the stator 30, Fig. 20 illustrates a V-phase connection (series connection) of the stator 30, and Fig. 21 illustrates a W-phase connection (series connection) of the stator 30.

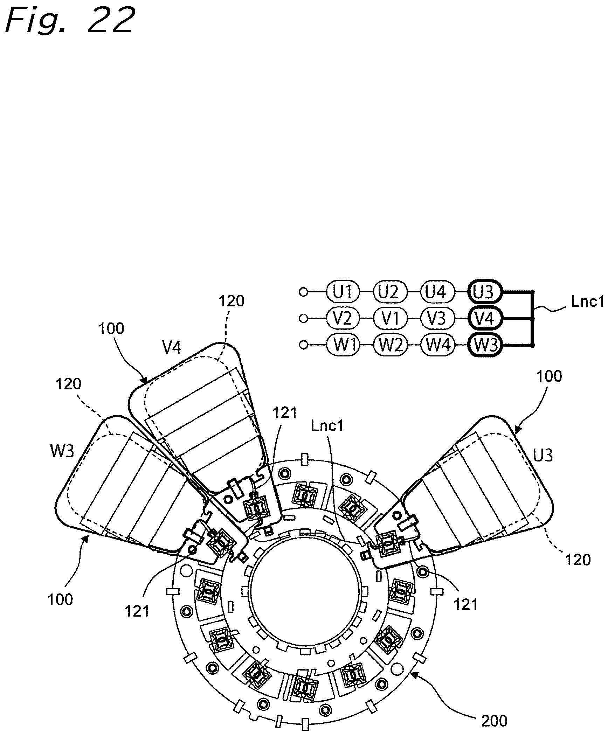

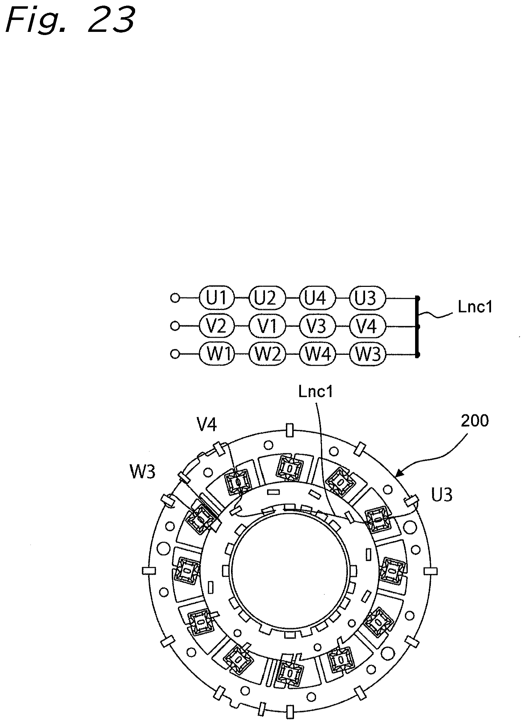

Fig. 22 illustrates a neutral point connection of the stator 30, and Fig. 23 illustrates the connecting line Lnc 1 of the connection plate 200.

In the axial gap-type motor M configured as described above, the outgoing lines 121 drawn from the coils 120 are electrically connected to the power source lines Lu, Lv, and Lw on the inner sides in the radial direction of the stator cores 110 relative to the inner peripheral ends of the stator cores 110, so that a magnet outer diameter of the first and second rotors 10 and 20 can be made larger than a case where the outgoing lines 121 drawn from the coils 120 are electrically connected to the power source lines Lu, Lv, and Lw on the outer sides in the radial direction the stator cores 110, thereby making it possible to achieve higher output and higher efficiency.

In addition, the connecting lines Luc1, Lvc1, Lwc1, and Lnc1 electrically connecting the outgoing lines 121 of the coils 120 are routed in the connection plate 200, so that it is possible to facilitate the routing work such as connection between the coils 120 by manufacturing in advance the connection plate 200 in which the connecting lines Luc1, Lvc1, Lwc1, and Lnc1 are routed.

In addition, it is possible to facilitate the establishment of electrical connection between the outgoing lines 121 of the coils 120 and the connecting lines Luc1, Lvc1, Lwc1, and Lnc1 by press-fitting the first terminal Tc1 (electric connecting terminal) into each press-fitting portion 203 of the connection plate 200.

In addition, the press-fitting portion 203 of the connection plate 200 are fitted into the cutout 135 (positioning portion) provided in the projection 134 of the insulator 130 to position the stator core 110 and the coil 120 relative to the connection plate 200, so that it is possible to facilitate the assembly work of the stator core 110 and the coil 120.

In addition, as illustrated in Fig. 11, each press-fitting portion 203 is provided in the connection plate 200 so as to allow the outgoing line 121 of the coil 120 wound around the stator core 110 to be routed at the acute angle θ relative to the center line La of the stator core 110 along the radial direction of the stator 30, and the press-fitting portion 203 is provided at a position along the outgoing direction of the outgoing line 121 drawn out from the outer periphery of the coil 120 (direction of the tangent to the outer periphery of the coil 120), so that it is possible to establish, in a smooth manner, the connection between the outgoing line 121 and each of the connecting lines Luc1, Lvc1, Lwc1, Lnc1 at the press-fitting portion 203.

In addition, the cylindrical portion 202 extending in the axial direction of the first and second rotors 10 and 20 is provided at the center portion of the connection plate 200, so that it is possible to guide the routing work of the connecting lines Luc1, Lvc1, Lwc1, and Lnc1 in the connection plate 200.

In addition, the connecting lines Luc1, Lvc1, Lwc1, and Lnc1 are positioned by the protrusions 211, 212, and 213 provided on the outer peripheral surface of the cylindrical portion 202 of the connection plate 200, so that it is possible to guide and hold, in a simple manner, the connecting lines Luc1, Lvc1, Lwc1, and Lnc1 in the connection plate 200 during the routing work, which increases work efficiency.

In addition, the ends of the connecting lines Luc1, Lvc1, Lwc1, and Lnc1 are held by a holding portion 205 provided in the outer peripheral portion of the connection plate 200, so that it is possible to position, in a reliable manner, the connecting lines Luc1, Lvc1, Lwc1, and Lnc1 in the connection plate 200.

### [Second embodiment]

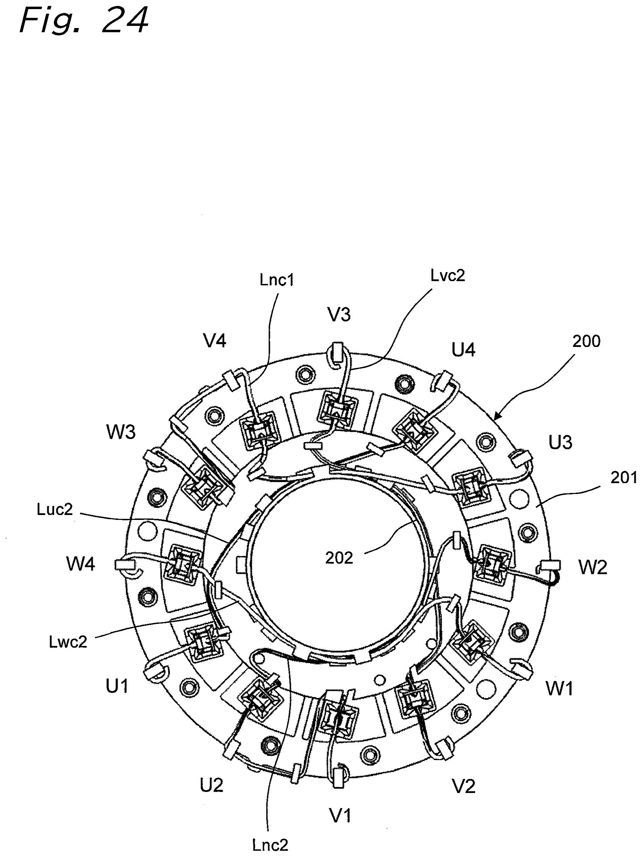

Fig. 24 is a plan view of a connection plate 200 of an axial gap-type motor M of a second embodiment of the present disclosure.

In the first embodiment, the coils 120 of each phase are connected in series, but the axial gap-type motor M of the second embodiment includes, as illustrated in Fig. 24, the connection plate 200 in which the coils 120 are connected in parallel. The parallel connection refers to a configuration where at least two coils to which the voltage of the same phase is applied are connected in parallel.

### <Connection plate (parallel connection)>

Fig. 24 illustrates an area where the split cores 100 of the magnetic poles U1 to U4, V1 to V4, and W1 to W4 are arranged. In Fig. 24, with the magnetic pole U1 as a reference magnetic pole, the split cores 100 (illustrated in Fig. 6) corresponding to the magnetic poles U1 to U4, V1 to V4, and W1 to W4 are arranged in the order of U1, U2, V1, V2, W1, W2, U3, U4, V3, V4, W3, and W4 in the counterclockwise direction.

In Fig. 24, "Luc2" denotes a connecting line that electrically connects the outgoing line 121 of the magnetic pole U1 to the outgoing line 121 of the magnetic pole U4. "Lvc2" denotes a connecting line that electrically connects the outgoing line 121 of the coil 120 of the magnetic pole V2 to the outgoing line 121 of the coil 120 of the magnetic pole V3. "Lwc2" denotes a connecting line that electrically connects the outgoing line 121 of the magnetic pole W1 to the outgoing line 121 of the magnetic pole W4. "Lnc1" denotes a connecting line that electrically connects the outgoing line 121 of the magnetic pole U3 to the outgoing line 121 of the magnetic pole V4 and that electrically connects the outgoing line 121 of the magnetic pole V4 to the outgoing line 121 of the magnetic pole W3. In other words, the connecting line electrically connects one of the outgoing lines 121 of the magnetic pole U3, the magnetic pole V4, and the magnetic pole W3 to the other two of the outgoing lines 121 of the magnetic pole U3, the magnetic pole V4, and the magnetic pole W3. "Lnc2" denotes a connecting line that electrically connects the outgoing line 121 of the magnetic pole V1 to the outgoing line 121 of the magnetic pole U2 and that electrically connects the outgoing line 121 of the magnetic pole U2 to the outgoing line 121 of the magnetic pole W2. In other words, the connecting line electrically connects one of the outgoing lines 121 of the magnetic pole V1, the magnetic pole U2, and the magnetic pole W2 to the other two of the outgoing lines 121 of the magnetic pole V1, the magnetic pole U2, and the magnetic pole W2.

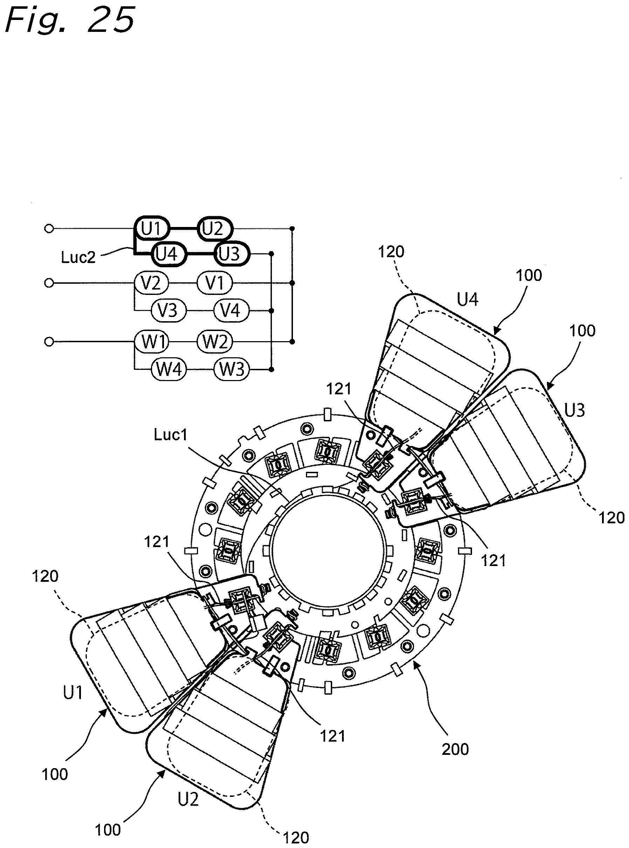

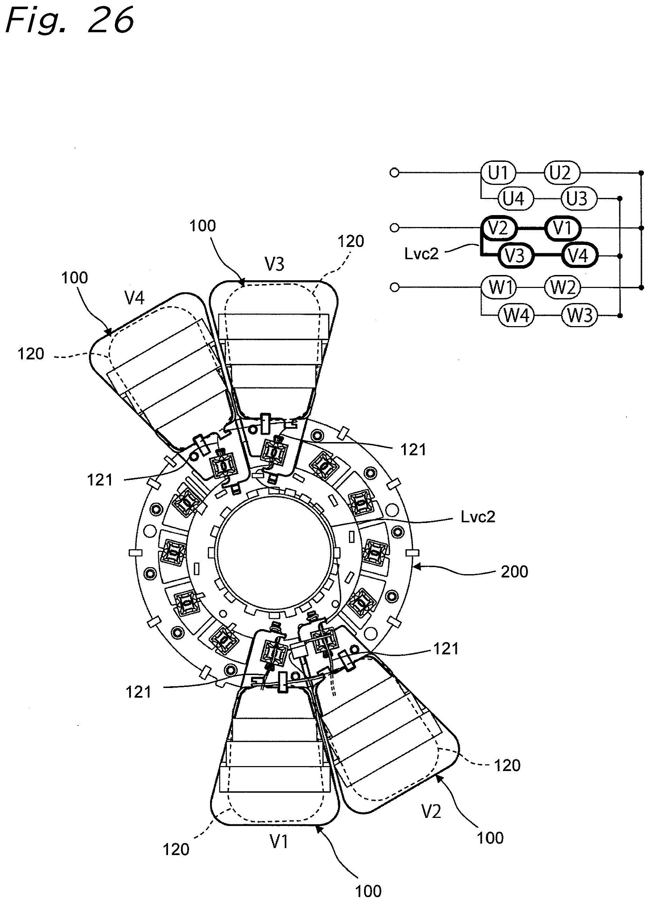

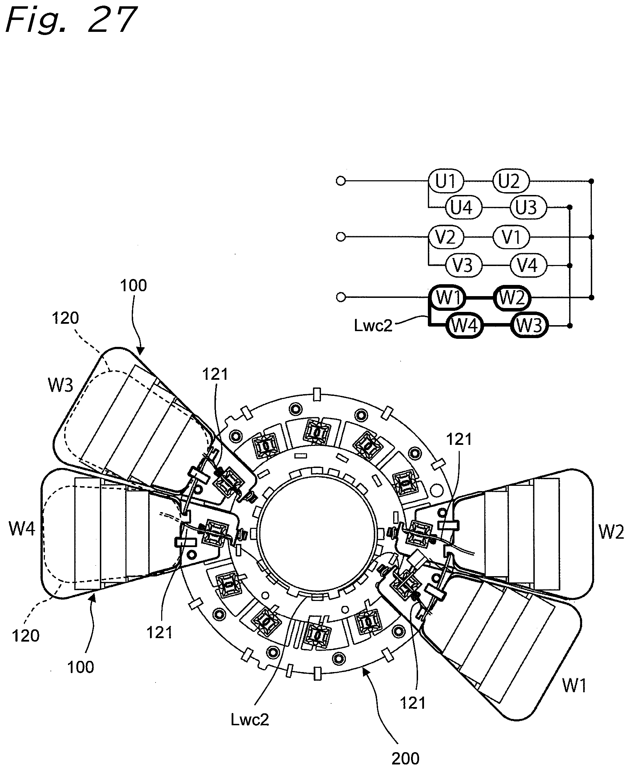

Fig. 25 illustrates a U-phase connection (parallel connection) of the stator 30, Fig. 26 illustrates a V-phase connection (parallel connection) of the stator 30, and Fig. 27 illustrates a W-phase connection (parallel connection) of the stator 30.

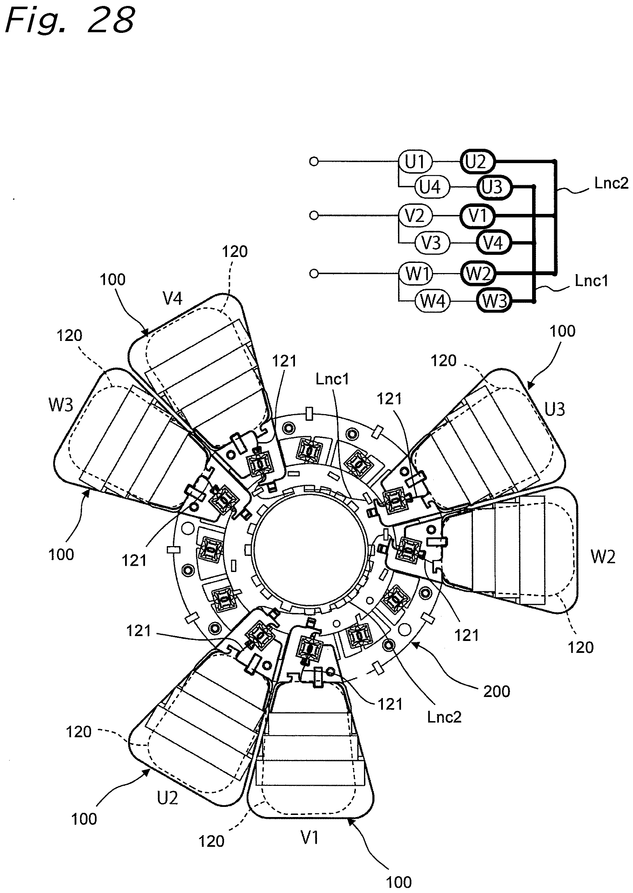

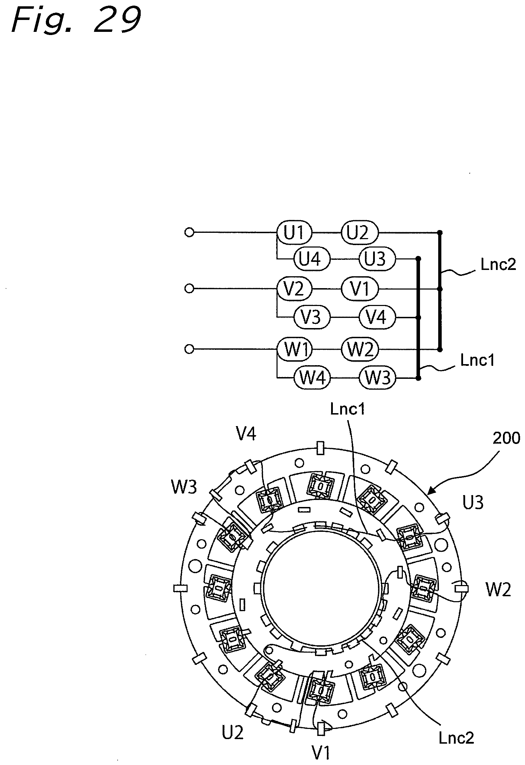

Fig. 28 illustrates a neutral point connection of the stator 30, and Fig. 29 illustrates the connecting lines Lnc1 and Lnc2 of the connection plate 200.

The axial gap-type motor M of the second embodiment produces the same effect as produced by the axial gap-type motor M of the first embodiment.

The axial gap-type motors M of the first and second embodiments can be each used as a highly versatile axial gap-type motor adapted to both series connection of coils and parallel connection of coils.

In the first and second embodiments, the axial gap-type motor M including the first rotor 10 and the second rotor 20 is provided, but the present disclosure may be applied to an axial gap-type motor including one rotor. In this case, the stator core may be provided with a back yoke.

In the first and second embodiments, the 10-pole 12-slot axial gap-type motor M has been described, but the number of poles and the number of slots are not limited thereto, and the present disclosure may be applied to axial gap-type motors having other configurations where different numbers of poles and slots are provided.

### [Third embodiment]

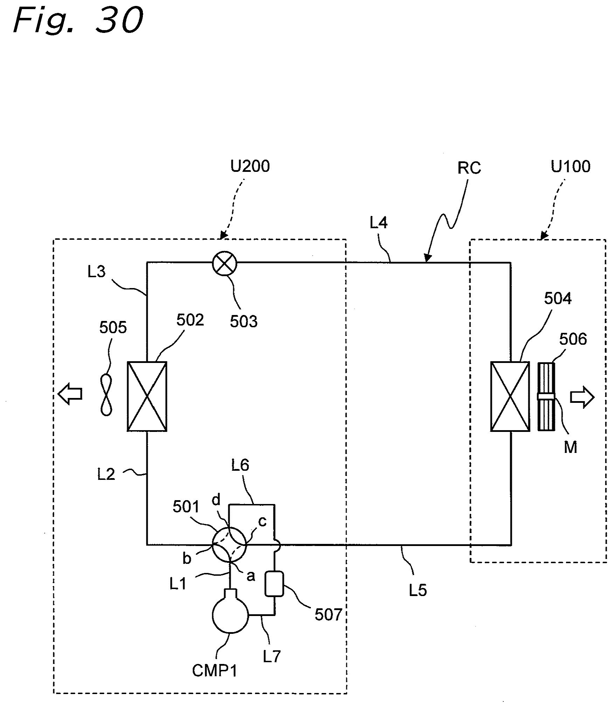

Fig. 30 is a circuit diagram of an air conditioner using an axial gap-type motor M of a third embodiment of the present disclosure. This air conditioner uses either of the axial gap-type motors M of the first and second embodiments.

As illustrated in Fig. 30, the air conditioner of the third embodiment includes an indoor unit U100 installed in an indoor space to be air-conditioned and an outdoor unit U200 installed outdoors.

### <Configuration of indoor unit U100>

The indoor unit U100 of the air conditioner includes an indoor heat exchanger 504 having one end connected to a refrigerant pipe L4 (connection pipe) and the other end connected to a refrigerant pipe L5 (connection pipe), an indoor fan 506 that supplies air to the indoor heat exchanger 504, and the axial gap-type motor M that drives the indoor fan 506. In this embodiment, a sirocco fan is used as the indoor fan 506. The indoor fan 506 is an example of a fan.

### <Configuration of outdoor unit U200>

The outdoor unit U200 of the air conditioner includes a compressor CMP 1, a four-way switching valve 501, an outdoor heat exchanger 502, an expansion valve 503 as an example of an expansion mechanism, an accumulator 507, an outdoor fan 505 that sends air to the outdoor heat exchanger 502.

The compressor CMP1 has a discharge side connected to a first port a of the four-way switching valve 501 via the refrigerant pipe L1. The four-way switching valve 501 has a second port b connected to one end of the outdoor heat exchanger 502 via the refrigerant pipe L2. The outdoor heat exchanger 502 has the other end connected to one end of the expansion valve 503 via the refrigerant pipe L3, and the expansion valve 503 has the other end connected to one end of the refrigerant pipe L4 (connection pipe). The refrigerant pipe L5 (connection pipe) has one end connected to a third port c of the four-way switching valve 501. The four-way switching valve 501 has a fourth port d connected to a suction side of the compressor CMP1 via a refrigerant pipe L6, the accumulator 507, and a suction pipe L7.

In the air conditioner described above, the air conditioner using the axial gap-type motor M of the first and second embodiments for driving the indoor fan 506 can increase air blowing performance.

In the third embodiment, the air conditioner that performs cooling operation and heating operation has been described, but the air conditioner is not limited to such a configuration, and the present disclosure may be applied to an air purifier and the like.

### [Fourth embodiment]

An axial gap-type motor M of a fourth embodiment of the present disclosure has a configuration similar to the configuration described with reference to Figs. 1 to 17. Therefore, the description of the similar configuration described above will be omitted. Note that, in this embodiment, protrusions of the cylindrical portion 202 not denoted by the reference numerals 211, 212, and 213 in Fig. 9 are also included in the protrusions that position the connecting lines Luc1, Lvc1, Lwc1, and Lnc1. In addition, the step 131a is an example of the holding portion that holds the power source lines Lu, Lv, and Lw.

### <Connection plate (series connection)>

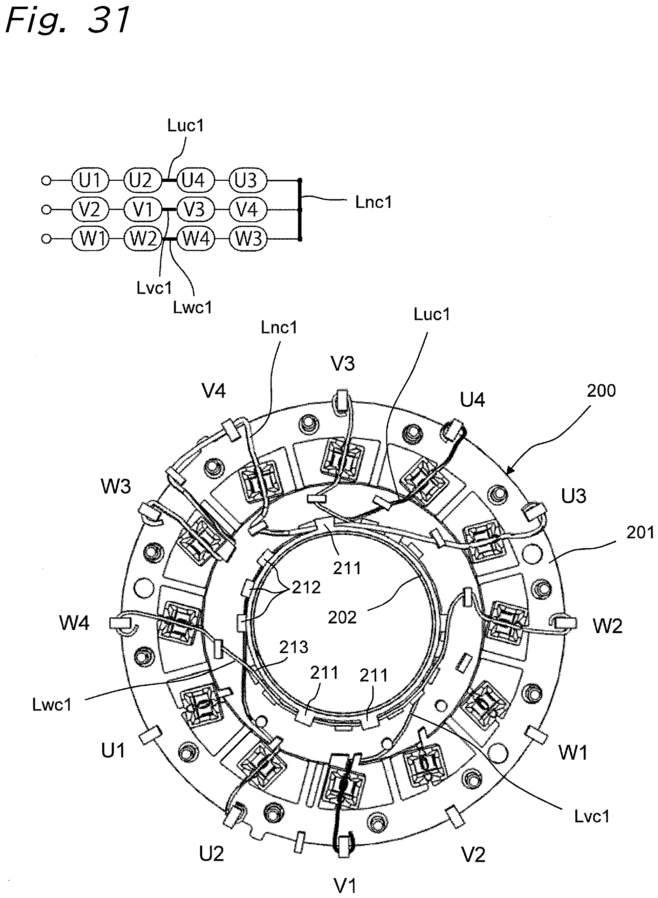

Fig. 31 is a plan view of a connection plate 200, and a connection diagram of series connection is illustrated on the upper side of Fig. 31. In Fig. 31, U1 to U4, V1 to V4, and W1 to W4 indicate areas where the split cores 100 corresponding to the magnetic poles U1 to U4, V1 to V4, and W1 to W4 are arranged. In Fig. 31, with the magnetic pole U1 as a reference magnetic pole, the split cores 100 (illustrated in Fig. 6) corresponding to the magnetic poles U1 to U4, V1 to V4, and W1 to W4 are arranged in the order of U1, U2, V1, V2, W1, W2, U3, U4, V3, V4, W3, and W4 in the counterclockwise direction.

In Fig. 31, "Luc1" denotes a connecting line that electrically connects the outgoing line 121 of the magnetic pole U2 to the outgoing line 121 of the magnetic pole U4. In addition, "Lvc1" denotes a connecting line that electrically connects the outgoing line 121 of the coil 120 of the magnetic pole V1 to the outgoing line 121 of the coil 120 of the magnetic pole V3. In addition, "Lwc1" denotes a connecting line that electrically connects the outgoing line 121 of the magnetic pole W2 to the outgoing line 121 of the magnetic pole W4. In addition, "Lnc1" denotes a connecting line that electrically connects the outgoing line 121 of the magnetic pole U3 to the outgoing line 121 of the magnetic pole V4 and that electrically connects the outgoing line 121 of the magnetic pole V4 to the outgoing line 121 of the magnetic pole W3. In other words, the connecting line electrically connects one of the outgoing lines 121 of the magnetic pole U3, the magnetic pole V4, and the magnetic pole W3 to the other two of the outgoing lines 121 of the magnetic pole U3, the magnetic pole V4, and the magnetic pole W3.

The protrusions 211, 212, and 213 for positioning the connecting lines Luc1, Lvc1, Lwc1, and Lnc1 are provided on the outer peripheral surface of the cylindrical portion 202 of the connection plate 200.

In the axial gap-type motor M configured as described above, the power source lines Lu, Lv, and Lw routed, through between the stator cores 110, from the outer side in the radial direction of the stator 30 to the inner side in the radial direction of the stator 30 relative to the inner peripheral end of each stator core 110 are electrically connected to the outgoing lines 121 drawn out from the coils 120 on the inner side in the radial direction of the stator cores 110. Furthermore, the power source lines Lu, Lv, and Lw are held by the step 131a (holding portion) provided at portions of the insulators 130 adjacent to each other, the portions facing each other and being located on the one sides of the insulators 130 in the axial direction of the stator 30 and the inner sides of the insulators 130 in the radial direction of the stator 30. As a result, the magnet outer diameter of the first and second rotors 10 and 20 can be made larger than a case where the outgoing lines 121 extending from the coils 120 are electrically connected to the power source lines Lu, Lv, and Lw on the outer sides in the radial direction of the stator cores 110, so that it is possible to achieve higher output and higher efficiency.

In addition, the connecting lines Luc1, Lvc1, Lwc1, and Lnc1 electrically connecting the outgoing lines 121 of the coils 120 are routed in the connection plate 200, so that it is possible to facilitate the routing work such as connection between the coils 120 by manufacturing in advance the connection plate 200 in which the connecting lines Luc1, Lvc1, Lwc1, and Lnc1 are routed.

In addition, it is possible to facilitate the establishment of electrical connection between the outgoing lines 121 of the coils 120 and the connecting lines Luc1, Lvc1, Lwc1, and Lnc1 by press-fitting the first terminal Tc1 (electric connecting terminal) into each press-fitting portion 203 of the connection plate 200.

In addition, the cutout 135 (positioning portion) provided in the projection 134 of the insulator 130 and the press-fitting portion 203 of the connection plate 200 are fitted to each other to position the stator core 110 and the coil 120 relative to the connection plate 200, so that it is possible to facilitate the assembly work of the stator core 110 and the coil 120.

In addition, the cylindrical portion 202 extending in the axial direction of the first and second rotors 10 and 20 is provided at the center portion of the connection plate 200, so that it is possible to guide the routing work of the connecting lines Luc1, Lvc1, Lwc1, and Lnc1 in the connection plate 200.

In addition, the connecting lines Luc1, Lvc1, Lwc1, and Lnc1 are positioned by the protrusions 211, 212, and 213 provided on the outer peripheral surface of the cylindrical portion 202 of the connection plate 200, so that it is possible to guide and hold, in a simple manner, the connecting lines Luc1, Lvc1, Lwc1, and Lnc1 in the connection plate 200 during the routing work, which increases work efficiency.

In addition, the ends of the connecting lines Luc1, Lvc1, Lwc1, and Lnc1 are held by a holding portion 205 provided in the outer peripheral portion of the connection plate 200, so that it is possible to position, in a reliable manner, the connecting lines Luc1, Lvc1, Lwc1, and Lnc1 in the connection plate 200.

### [Fifth embodiment]

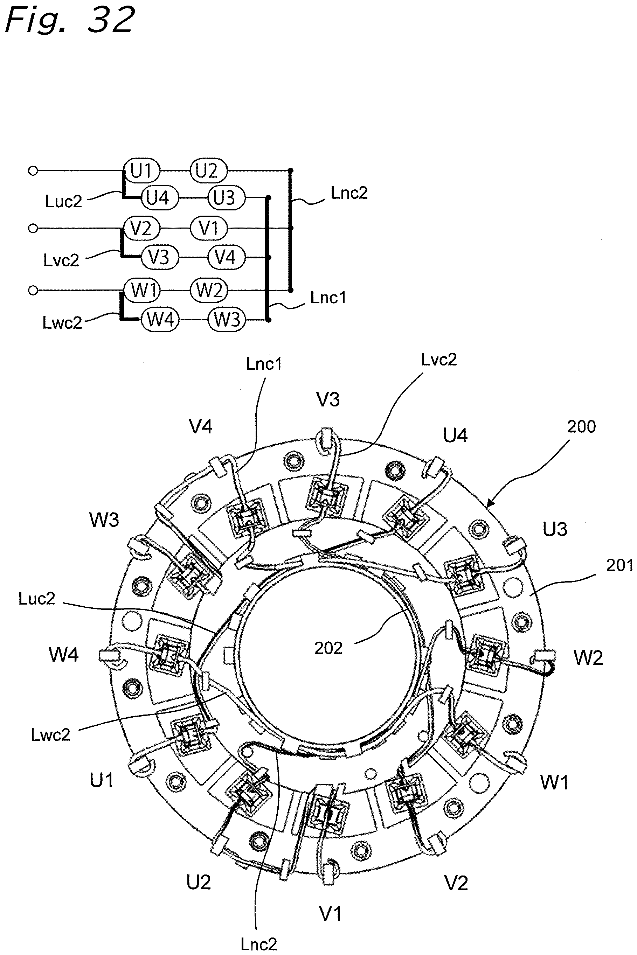

Fig. 32 is a plan view of a connection plate 200 of an axial gap-type motor M of a fifth embodiment of the present disclosure.

In the fourth embodiment, the coils 120 of each phase are connected in series, but the axial gap-type motor M of the fifth embodiment includes, as illustrated in Fig. 32, a connection plate 200 in which the coils 120 are connected in parallel. The parallel connection refers to a configuration where at least two coils to which the voltage of the same phase is applied are connected in parallel. A connection diagram of the parallel connection is illustrated on the upper side of Fig. 32.

### <Connection plate (parallel connection)>

In Fig. 32, U1 to U4, V1 to V4, and W1 to W4 indicate areas where the split cores 100 of the magnetic poles U1 to U4, V1 to V4, and W1 to W4 are arranged. In Fig. 32, with the magnetic pole U1 as a reference magnetic pole, the split cores 100 (illustrated in Fig. 6) corresponding to the magnetic poles U1 to U4, V1 to V4, and W1 to W4 are arranged in the order of U1, U2, V1, V2, W1, W2, U3, U4, V3, V4, W3, and W4 in the counterclockwise direction.

In Fig. 32, "Luc2" denotes a connecting line that electrically connects the outgoing line 121 of the magnetic pole U1 to the outgoing line 121 of the magnetic pole U4. "Lvc2" denotes a connecting line that electrically connects the outgoing line 121 of the coil 120 of the magnetic pole V2 to the outgoing line 121 of the coil 120 of the magnetic pole V3. "Lwc2" denotes a connecting line that electrically connects the outgoing line 121 of the magnetic pole W1 to the outgoing line 121 of the magnetic pole W4. "Lnc1" denotes a connecting line that electrically connects the outgoing line 121 of the magnetic pole U3 to the outgoing line 121 of the magnetic pole V4 and that electrically connects the outgoing line 121 of the magnetic pole V4 to the outgoing line 121 of the magnetic pole W3. In other words, the connecting line electrically connects one of the outgoing lines 121 of the magnetic pole U3, the magnetic pole V4, and the magnetic pole W3 to the other two of the outgoing lines 121 of the magnetic pole U3, the magnetic pole V4, and the magnetic pole W3. "Lnc2" denotes a connecting line that electrically connects the outgoing line 121 of the magnetic pole V1 to the outgoing line 121 of the magnetic pole U2 and that electrically connects the outgoing line 121 of the magnetic pole U2 to the outgoing line 121 of the magnetic pole W2. In other words, the connecting line electrically connects one of the outgoing lines 121 of the magnetic pole V1, the magnetic pole U2, and the magnetic pole W2 to the other two of the outgoing lines 121 of the magnetic pole V1, the magnetic pole U2, and the magnetic pole W2.

The axial gap-type motor M of the fifth embodiment produces the same effect as produced by the axial gap-type motor M of the fourth embodiment.

The axial gap-type motors M of the fourth and fifth embodiments can be each used as, by using the connection plate 200, a highly versatile axial gap-type motor adapted to both series connection of coils and parallel connection of coils.

In the fourth and fifth embodiments, the axial gap-type motor M including the first rotor 10 and the second rotor 20 is provided, but the present disclosure may be applied to an axial gap-type motor including one rotor. In this case, the stator core may be provided with a back yoke.

In the fourth and fifth embodiments, the 10-pole 12-slot axial gap-type motor M has been described, but the number of poles and the number of slots are not limited thereto, and the present disclosure may be applied to axial gap-type motors having other configurations where different numbers of poles and slots are provided.

### [Sixth embodiment]

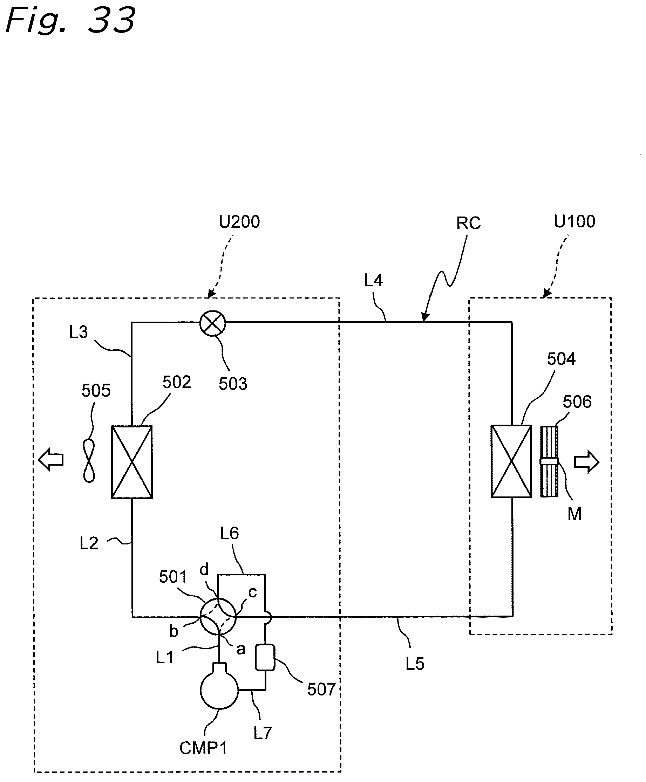

Fig. 33 is a circuit diagram of an air conditioner using an axial gap-type motor M of a sixth embodiment of the present disclosure. This air conditioner uses either of the axial gap-type motors M of the fourth and fifth embodiments.

As illustrated in Fig. 33, the air conditioner of the sixth embodiment includes the indoor unit U100 installed in an indoor space to be air-conditioned and the outdoor unit U200 installed outdoors.

### <Configuration of indoor unit U100>

The indoor unit U100 of the air conditioner includes an indoor heat exchanger 504 having one end connected to a refrigerant pipe L4 (connection pipe) and the other end connected to a refrigerant pipe L5 (connection pipe), an indoor fan 506 that supplies air to the indoor heat exchanger 504, and the axial gap-type motor M that drives the indoor fan 506. In this embodiment, a sirocco fan is used as the indoor fan 506. The indoor fan 506 is an example of a fan.

### <Configuration of outdoor unit U200>

The outdoor unit U200 of the air conditioner includes a compressor CMP 1, a four-way switching valve 501, an outdoor heat exchanger 502, an expansion valve 503 as an example of an expansion mechanism, an accumulator 507, an outdoor fan 505 that sends air to the outdoor heat exchanger 502.

The compressor CMP1 has a discharge side connected to a first port a of the four-way switching valve 501 via the refrigerant pipe L1. The four-way switching valve 501 has a second port b connected to one end of the outdoor heat exchanger 502 via the refrigerant pipe L2. The outdoor heat exchanger 502 has the other end connected to one end of the expansion valve 503 via the refrigerant pipe L3, and the expansion valve 503 has the other end connected to one end of the refrigerant pipe L4 (connection pipe). The refrigerant pipe L5 (connection pipe) has one end connected to a third port c of the four-way switching valve 501. The four-way switching valve 501 has a fourth port d connected to a suction side of the compressor CMP1 via a refrigerant pipe L6, the accumulator 507, and a suction pipe L7.

The air conditioner using the axial gap-type motor M of the fourth and fifth embodiments for driving the indoor fan 506 can increase air blowing performance.

In the sixth embodiment, the air conditioner that performs cooling operation and heating operation has been described, but the air conditioner is not limited to such a configuration, and the present disclosure may be applied to an air purifier and the like.

The foregoing description concerns specific embodiments of the present disclosure; however, the present disclosure is not limited to the first to sixth embodiments, and various modifications and variations may be made within the scope of the present disclosure. For example, an appropriate combination of the matters described in the first to sixth embodiments may be used as another embodiment.

### REFERENCE SIGNS LIST

10 First rotor
11 Disk-shaped magnet member
11a Outer peripheral portion
11b Inner peripheral portion
12 Fixing portion
20 Second rotor
21 Disk-shaped magnet member
21a Outer peripheral portion
21b Inner peripheral portion
22 Fixing portion
30 Stator
31 Resin-molded portion
40 Shaft
100 Split core
110 Stator core
101 First core portion
102 Second core portion
103 Third core portion
120 Coil
121 Outgoing line
122 Transition line
130 Insulator
131 First flange portion
131a Step
132 Second flange portion
133 Hook portion
134 Projection
135 Cutout (positioning portion)
136 Round hole
138 Holding portion (holding portion)
200 Connection plate
201 Annular disk portion
201a Hole
202 Cylindrical portion
203 Press-fitting portion
204 Protrusion
300 Bearing holding portion
301 First bearing
302 Second bearing
400 Bushing
CMP1 Compressor
G1, G2 Air gap
L1 to L6Refrigerant pipe
L7 Suction pipe
Lu, Lv, Lw Power source line
M Axial gap-type motor
Tc1 First terminal (electric connecting terminal)
Tc2 Second terminal
U1, U2, U3, U4 Magnetic pole
V1, V2, V3, V4 Magnetic pole
W1, W2, W3, W4 Magnetic pole
501 Four-way switching valve
502 Outdoor heat exchanger
503 Expansion valve
504 Indoor heat exchanger
506 Indoor fan (fan)
507 Accumulator
Luc1, Lvc1, Lwc1, Lnc1, Luc2, Lvc2, Lwc2, Lnc2 Connecting line

## Claims

1. An axial gap-type motor (M) comprising:
a rotor (10, 20); and
a stator (30) facing the rotor (10, 20) with an air gap (G1, G2) interposed between the stator (30) and the rotor (10, 20) in an axial direction of the rotor (10, 20),
wherein
the stator (30) includes a plurality of stator cores (110) arranged in an annular pattern and a coil (120) wound around each of the stator cores (110), and
outgoing lines (121) drawn out from the coils (120) are electrically connected to power source lines (Lu, Lv, Lw) on inner sides in a radial direction of the stator cores (110) relative to inner peripheral ends of the stator cores (110).

2. The axial gap-type motor (M) according to claim 1, further comprising a connection plate (200) in which connecting lines (Luc1, Lvc1, Lwc1, Lnc1, Luc2, Lvc2, Lwc2, Lnc2) that electrically connect the outgoing lines (121) of the coils (120) are routed.

3. The axial gap-type motor (M) according to claim 2, wherein
the connection plate (200) includes press-fitting portions (203) into which electric connecting terminals (Tc1) that electrically connect the outgoing lines (121) of the coils (120) and the connecting lines (Luc1, Lvc1, Lwc1, Lnc1, Luc2, Lvc2, Lwc2, Lnc2) are press-fitted.

4. The axial gap-type motor (M) according to claim 3, wherein
the stator (30) includes insulators (130) that insulate the stator cores (110) from the coils (120),
the insulators (130) each include a projection (134) extending toward the inner side in the radial direction of a corresponding one of the stator cores (110) and a positioning portion (135) provided in the projection (134), and
the positioning portions (135) of the insulators (130) and the press-fitting portions (203) of the connection plate (200) are fitted to each other to position the stator cores (110) and the coils (120) relative to the connection plate (200).

5. The axial gap-type motor (M) according to claim 3 or 4, wherein
the press-fitting portions (203) are provided in the connection plate (200) so as to allow the outgoing lines (121) of the coils (120) wound around the stator cores (110) to be each routed at an acute angle (θ) relative to a center line (La) of a corresponding one of the stator cores (110) along a radial direction of the stator (30).

6. The axial gap-type motor according to any one of claims 2 to 5, wherein
a cylindrical portion (202) extending in the axial direction of the rotor (10, 20) is provided in a center portion of the connection plate (200).

7. The axial gap-type motor (M) according to claim 6, wherein
protrusions (211, 212, 213) that position the connecting lines (Luc1, Lvc1, Lwc1, Lnc1, Luc2, Lvc2, Lwc2, Lnc2) are provided on an outer peripheral surface of the cylindrical portion (202) of the connection plate (200).

8. The axial gap-type motor (M) according to any one of claims 2 to 7, wherein
holding portions (205) that hold ends of the connecting lines (Luc1, Lvc1, Lwc1, Lnc1, Luc2, Lvc2, Lwc2, Lnc2) are provided in an outer peripheral portion of the connection plate (200).

9. The axial gap-type motor (M) according to any one of claims 2 to 8, wherein
the connection plate (200) is configured to enable routing of the connecting lines (Luc1, Lvc1, Lwc1, Lnc1, Luc2, Lvc2, Lwc2, Lnc2) to adapt to both series connection of the coils (120) and parallel connection of the coils (120).

10. The axial gap-type motor (M) according to any one of claims 1 to 9, wherein
any one of a U-phase voltage, a V-phase voltage, or a W-phase voltage is applied to the coils (120) via a corresponding one of the power source lines (Lu, Lv, Lw),
the stator (30) has magnetic poles (U1, U2, U3, U4, V1, V2, V3, V4, W1, W2, W3, W4) formed by the coils (120) and the stator cores (110) around which the coils (120) are wound,
the magnetic poles (U1, U2, U3, U4, V1, V2, V3, V4, W1, W2, W3, W4) in which the voltage of a same phase is applied to the coils (120) include pairs of magnetic poles, each pair of magnetic poles corresponding to two of the magnetic poles (U1, U2, U3, U4, V1, V2, V3, V4, W1, W2, W3, W4) adjacent to each other and having one ends of respective coils (120) connected to each other, and
the pairs of magnetic poles are arranged point-symmetrically with respect to a center of the stator (30).

11. The axial gap-type motor (M) according to claim 1, wherein
the stator (30) includes insulators (130) that insulate the stator cores (110) from the coils (120),
the power source lines (Lu, Lv, Lw) are routed, through between the stator cores (110), from an outer side in a radial direction of the stator (30) to the inner side in the radial direction of the stator (30) relative to the inner peripheral ends of the stator cores (110), and
holding portions (131a) that hold the power source lines (Lu, Lv, Lw) are provided at portions of the insulators (130) adjacent to each other, the portions facing each other and being located on one sides of the insulators (130) in an axial direction of the stator (30) and on inner sides of the insulators (130) in the radial direction of the stator (30).

12. The axial gap-type motor (M) according to claim 11, further comprising a connection plate (200) in which connecting lines (Luc1, Lvc1, Lwc1, Lnc1, Luc2, Lvc2, Lwc2, Lnc2) that electrically connect the outgoing lines (121) drawn out from the coils (120) are routed.

13. An air conditioner comprising:
an axial gap motor (M) according to any one of claims 1 to 12; and
a fan (506) driven by the axial gap-type motor (M).
